Europäisches Patentamt

European Patent Office

Office européen des brevets

(19)

(11) **EP 1 157 500 B1**

(12) **EUROPÄISCHE PATENTSCHRIFT**

(45) Veröffentlichungstag und Bekanntmachung des Hinweises auf die Patenterteilung:
**17.07.2002 Patentblatt 2002/29**

(21) Anmeldenummer: **00918786.5**

(22) Anmeldetag: **10.03.2000**

(51) Int Cl.[7]: **H04L 9/00**

(86) Internationale Anmeldenummer:
**PCT/EP00/02144**

(87) Internationale Veröffentlichungsnummer:
**WO 00/54452 (14.09.2000 Gazette 2000/37)**

(54) **VORRICHTUNG UND VERFAHREN ZUM VERBERGEN VON INFORMATIONEN UND VORRICHTUNG UND VERFAHREN ZUM EXTRAHIEREN VON INFORMATIONEN**

DEVICE AND METHOD FOR HIDING INFORMATION AND DEVICE AND METHOD FOR EXTRACTING INFORMATION

DISPOSITIF ET PROCEDE PERMETTANT DE CACHER DES INFORMATIONS, ET DISPOSITIF ET PROCEDE PERMETTANT D'EXTRAIRE DES INFORMATIONS

(84) Benannte Vertragsstaaten:
**AT BE CH CY DE DK ES FI FR GB GR IE IT LI LU MC NL PT SE**

(30) Priorität: **10.03.1999 DE 19910621**

(43) Veröffentlichungstag der Anmeldung:
**28.11.2001 Patentblatt 2001/48**

(73) Patentinhaber: **Pötter, Thomas**
**34477 Twistetal-Berndorf (DE)**

(72) Erfinder: **Pötter, Thomas**
**34477 Twistetal-Berndorf (DE)**

(74) Vertreter: **Schoppe, Fritz, Dipl.-Ing. et al**
**Schoppe, Zimmermann & Stöckeler**
**Patentanwälte**
**Postfach 71 08 67**
**81458 München (DE)**

(56) Entgegenhaltungen:
• **BENDER W ET AL: "TECHNIQUES FOR DATA HIDING" IBM SYSTEMS JOURNAL,US,IBM CORP. ARMONK, NEW YORK, Bd. 35, Nr. 3/04, 1996, Seiten 313-335, XP000635079 ISSN: 0018-8670 in der Anmeldung erwähnt**
• **WAYNER P.: "DISAPPEARING CRYPTOGRAPHY" , ACADEMIC PRESS , LONDON XP002144813 in der Anmeldung erwähnt Seite 93 -Seite 123**

EP 1 157 500 B1

**Beschreibung**

Die vorliegende Erfindung bezieht sich auf die Steganographie und insbesondere auf ein steganographisches Konzept, das maximale Sicherheit liefert, derart, daß kein Verdacht geschöpft wird, daß ein Text verborgene Informationen enthält.

Grundsätzlich bezieht sich die Steganographie auf ein Gebiet der Technik, in dem versucht wird, geheime Nachrichten in anderen Nachrichten zu verstecken, derart, daß ein Nicht-Befugter überhaupt keinen Verdacht schöpft, daß in der ihm vorliegenden Nachricht eine geheime Nachricht versteckt ist. Damit kann im Gegensatz zur Kryptographie, d. h. dem Verschlüsseln von Nachrichten, ein effektiver Schutz geheimer Nachrichten erreicht werden, da ein Nicht-Befugter überhaupt keinen Verdacht schöpft, daß eine Nachricht eine geheime Nachricht enthält. Dagegen kann man verschlüsselten Nachrichten ohne weiteres ansehen, daß sie verschlüsselt sind. Es existieren viele Techniken, um Verschlüsselungen zu "knacken". In der Technik besteht ein Konsens darüber, daß auf beliebige Art und Weise verschlüsselte Nachrichten mit einem beliebig hohen Aufwand entschlüsselt werden können. Die Anstrengungen in der Kryptographie konzentrieren sich daher insbesondere darauf, den Aufwand für einen unbefugten Entschlüssler so groß als möglich zu machen, derart, daß er, abgeschreckt von dem hohen Aufwand, von einem unbefugten Entschlüsseln der verschlüsselten Nachrichten absieht. Unter bestimmten Umständen wird jedoch ein beliebig hoher Aufwand in Kauf genommen, um besonders wichtige Nachrichten entschlüsseln zu können. Man nimmt an, daß es für viele der bekannten Verschlüsselungsverfahren intelligentere aber dafür weniger aufwendige Verfahren zum "Knacken" gibt. Für keines der bisher bekannten Verfahren kann man ein solches effizientes "Knacken" ausschließen. Hier ist die Steganographie eine Ergänzung. Die Steganographie - Steganographie bedeutet ursprünglich verdecktes Schreiben - versucht, eine geheime Information so in einer Nachricht zu verstecken, daß niemand überhaupt Verdacht schöpft, daß hier bereits eine geheime Nachricht versteckt ist. In diesem Fall wird auch der allerhöchste Aufwand nichts nützen, da ein Unbefugter gar nicht weiß, welche Nachricht eine geheime Nachricht enthält, insbesondere wenn er eine große Menge von Nachrichten überwachen soll.

In jüngster Zeit besteht ein großer Bedarf nach steganographischen Techniken, da sich die "email" immer weiter ausgebreitet hat, wobei die Anwendungen nicht mehr nur im militärischen Bereich sind. Insbesondere besteht bei Firmen der Bedarf, geheimzuhaltende Geschäftszahlen elektronisch zu übermitteln. Es versteht sich von selbst, daß kein Unbefugter durch Anzapfen einer Datenleitung, die beispielsweise ein Teil des -Internets sein kann, Zugang zu solchen geheimen Geschäftsdaten haben soll. So existieren eine Vielzahl von Mail-Programmen, die einen Text vor dem Verschicken verschlüsseln. Wie es jedoch bereits ausgeführt worden ist, existiert keine sichere Verschlüsselung.

Daher haben sich in jüngster Zeit moderne Steganographiekonzepte herausgebildet. Eines dieser Steganographiekonzepte besteht darin, in Bilddateien das letzte Bit oder Least Significant Bit von Bildpixeln für die Speicherung der zu verbergenden Informationen zu benutzen. Solche Verfahren werden ausführlich von Joshua R. Smith u. a., "Modulation and Information Hiding in Images", First International Workshop, Cambridge, UK, 30. Mai bis 1. Juni 1996, Seiten 207-225 ausführlich beschrieben. Obgleich in Bildern sehr viele geheimen Informationen versteckt werden können, ist an diesen Verfahren nachteilig, daß Bilddateien im allgemeinen sehr große Dateien sind, weshalb eine Übertragung mittels elektronischer Post relativ lange dauert. Außerdem ist ein häufiges Versenden von sehr großen Dateien zwischen einem üblichen Sender und einem üblichen Empfänger relativ auffällig, was dem steganographischen Gedanken an sich zuwider läuft.

Bekannte Verfahren zum Verbergen von Informationen in Texten bestehen darin, daß bestimmte einfach vordefinierte Satzstrukturen erzeugt werden können, wobei die grammatikalische Zusammenstellung eines bestimmten Satzes eine üblicherweise binäre zu verbergende Information wiederspiegelt. Diese Verfahren sind ausführlich in Peter Wayner, "Disappearing Cryptography", Acadamic Press Inc., 1996, S. 91 - 121, beschrieben. Solche vordefinierten Grammatiken haben den Nachteil, daß sich ein Sender und ein Empfänger, wenn sie häufig geheime Informationen kommunizieren wollen, dauernd Texte mit im wesentlichen gleichem Inhalt oder mit nur gering abgewandeltem Bedeutungsinhalt schicken, woraus der Verdacht geschöpft werden kann, daß hier geheime Informationen versteckt sind.

Bekannte Verfahren zum Verbergen von Informationen in Texten verwenden daher entweder vordefinierte Grammatiken, die entweder nur einfache vordefinierte Satzstrukturen erzeugen können oder aber allein auf der Veränderung der Steuerzeichen, Leerzeichen und Tabulatoren beruhen. Beide Verfahren sind relativ auffällig, nur sehr begrenzt einsetzbar, liefern nur eine geringe Bandbreite, d. h. die Menge der zu verbergenden Informationen in einem bestimmten Text ist relativ klein, und dieselben sind nicht robust gegenüber einfachen Veränderungen, wie z. B. durch Umformatieren des Textes oder durch leichtes Umformulieren. Solche Verfahren sind daher ebenfalls für handschriftliche Notizen oder Passagen in Printmedien relativ ungeeignet.

Insbesondere besteht ein Bedarf, über einen Zeitungsartikel geheime Informationen an einen oder mehrere Empfänger zu verteilen. So wäre es besonders auffällig, wenn an einer Stelle in der Zeitung auf einmal eine vordefinierte Grammatik sein würde, die allein aufgrund ihres Inhalts auffällt, es sei denn, daß die Grammatik zufällig an das aktuelle Tagesgeschehen aktualisiert worden ist.

In der Fachveröffentlichung "Techniques for data hiding", W. Bender u. a., IBM Systems Journal, Bd. 35, Nr. 3 und 4, 1996, Seite 313-336 sind verschiedene Steganographie-Konzepte beschrieben. Unter anderem werden Möglichkeiten zum Verbergen von Daten in einem Text dargestellt, die ein Verfahren zum Verbergen von Informationen über die Manipulation von unbenutztem Raum auf der bedruckten Seite, ein syntaktisches Verfahren, bei dem z. B. die Satzzeichen zum Verbergen von Informationen verwendet werden, und ein semantisches Verfahren umfassen, bei dem zum Verbergen von Informationen eine Manipulation der Wörter selbst verwendet wird. Beim semantischen Verfahren wird zwei Synonymen ein Primär- bzw. ein Sekundär-Wert zugeordnet. Im Falle vieler Synonyme kann mehr als ein Bit pro Synonym codiert werden. Als problematisch wird angesehen, daß der Wunsch nach dem Verbergen von möglichst vielen Informationen mit den doch vorhandenen Bedeutungsunterschieden zwischen den Synonymen kollidieren kann. Beim syntaktischen Verfahren wird die Diktion und die Struktur von Texten verändert, ohne daß die Bedeutung bzw. der Ton wesentlich verändert wird. Dies wird dadurch erreicht, daß im Falle des Vorliegens einer grammatikalischen Struktur, die einen Hauptsatz und einen Nebensatz aufweist, ein Informationsbit dadurch in dem Text verborgen wird, daß der Nebensatz vor dem Hauptsatz angeordnet ist, oder daß der Nebensatz nach dem Hauptsatz angeordnet ist. Bei diesem Verfahren wird als problematisch angesehen, daß die Möglichkeiten zum Verbergen von Informationen begrenzt sind.

Die EP 0 268 367 bezieht sich auf eine Schnittstelle für natürliche Sprache, welche dazu verwendet wird, die semantische Korrektheit einer Abfrage sicherzustellen. Hierzu wird ein zu analysierender Text in einen Lexikon-Analysator eingegeben, welcher mit einem Synonym-Lexikon verbunden ist, um eine Synonym-Substitution durchzuführen, um einem dem Lexikon-Analysator nachgeschalteten Parser ein möglichst kleines Standardvokabular übermitteln zu können. Der Parser ist zusätzlich mit einem Hauptlexikon und einer Grammatikstufe verbunden, um eine syntaktische Analyse der Texteingabe, welche gegebenenfalls Synonyme aufweist, durchzuführen. Die Aufgabe des Parsers wird in eine Vereinfachungsstufe eingespeist, die dazu führt, einen Recall oder eine Anzahl von Treffern oder eine Anzahl der zurückgelieferten Dokumente einer Abfrage zu erhöhen. Die vereinfachte Abfrage wird wiederum einer Übersetzungsstufe zugeführt, welche mit einem Datenbankverwaltungssystem gekoppelt ist, das eine Ausgabe erzeugen kann, die als Schnittstelle für einen Benutzer fungieren kann.

Das US-Patent Nr. 5,424,947 bezieht sich auf eine Vorrichtung und ein Verfahren zum Analysieren von natürlicher Sprache und auf den Aufbau einer Wissensdatenbank für die Analyse von natürlicher Sprache. Ein Satz wird durch einen Parser syntaktisch analysiert, um die Phrasenstruktur desselben einschließlich einer vorhandenen Mehrdeutigkeit zu liefern. Die Phrasenstruktur wird einem Abhängigkeitsanalysator zugeführt, der ausgangsseitig eine Abhängigkeitsstruktur ohne Mehrdeutigkeit erzeugt. Hierzu wird auf eine Wissensdatenbank zugegriffen, welche Abhängigkeits-/Taxonym-/Synonym-Daten und Kontextabhängigkeitsdaten umfaßt. Die Abhängigkeitsstruktur ohne Mehrdeutigkeit wird einem System zur automatischen Verarbeitung von natürlichsprachigen Texten, wie z. B. einem maschinellen Übersetzungssystem, zugeführt.

Die Aufgabe der vorliegenden Erfindung besteht darin, ein verbessertes steganographisches Konzept zu schaffen, das flexibel einsetzbar ist und gleichzeitig ein hohes Maß an Unauffälligkeit liefert.

Diese Aufgabe wird durch eine Vorrichtung zum Verbergen von Informationen nach Patentanspruch 1, durch eine Vorrichtung zum Extrahieren von Informationen nach Patentanspruch 20, durch ein Verfahren zum Verbergen von Informationen nach Patentanspruch 25 und durch ein Verfahren zum Extrahieren von Informationen nach Patentanspruch 26 gelöst.

Der vorliegenden Erfindung liegt die Erkenntnis zugrunde, daß die natürlichste Nachrichtenart zum Verbergen von Informationen Text ist. Das übliche Kommunikationsmedium besteht nicht im Versenden von Bildern sondern im Versenden von textuellen Nachrichten. Allein aus diesem Grund eignet sich normaler Text am besten zum Verbergen von Informationen. Gemäß der vorliegenden Erfindung wird zum Verbergen von Informationen in einem Text die Sprache an sich verwendet. Jede Sprache enthält eine außerordentlich große Redundanz. Daher können viele verschiedenen Dinge auf eine sehr große Anzahl von Arten und Weisen ausgedrückt werden. Formulierungsalternativen bestehen in verschiedenen Satzstellungen, verschiedenen Synonymen und verschiedenen Präpositionen etc. Bestimmte Satzstellungen sind aufgrund der grammatikalischen Regeln verboten und würden daher sofort auffallen. Daher werden zum Verbergen von Informationen nur die Formulierungsalternativen verwendet, die (grammatikalisch und lexikalisch) zulässig sind. Allgemein gesagt wird ein Text abhängig von den zu verbergenden Informationen umformuliert, wobei die Informationen in dem umformulierten Text verborgen sind. Solche umformulierten Texte werden nicht auffallen, da sie keine künstlichen Elemente umfassen sondern lediglich eine andere Art und Weise des Ausdrückens eines bestimmten Sachverhalts sind. Personen oder Programme, die eine Vielzahl von Nachrichten daraufhin untersuchen, ob hier geheime Informationen verborgen sind, führen nicht immer Statistiken über die üblichen Ausdrucksweisen des Verfassers. In diesem Fall kann man größere Umformulierungsfreiheiten gestatten. Vermutet man, daß solche Statistiken geführt werden, können noch immer automatische Umformulierungen unter Einhaltung dieser typischen Charakteristik durchgeführt werden. Überwacher haben daher keine Möglichkeit, festzustellen, ob ein Text bearbeitet worden ist oder nicht. Damit wird dem Kerngedanken der Steganographie Genüge geleistet, der darin besteht, Informationen so zu verbergen, daß ein Unbefugter gar nicht erkennt, daß überhaupt Nachrichten verborgen sind.

Gemäß einem ersten Aspekt betrifft die vorliegende Erfindung eine Vorrichtung zum Verbergen von Informationen in einem Text, der zumindest einen Satz aufweist, mit folgenden Merkmalen:

einer Einrichtung zum Liefern des Textes;

einer Einrichtung zum sprachlichen Analysieren des Textes, um Textbestandteile zu liefern, wobei die Textbestandteile Bestandteile des Satzes sind, und wobei der Satz neben zumindest einem weiteren Bestandteil als Bestandteil genau ein Prädikat aufweist;

einer Einrichtung zum Bestimmen einer Mehrzahl von Formulierungsalternativen für den Text

- durch Variieren der Reihenfolge der Textbestandteile selbst,

- durch Ermitteln von Synonymen für die Textbestandteile und Variieren der Reihenfolge der Synonyme für die Textbestandteile, oder

- durch Ermitteln von Synonymen für zumindest einen Textbestandteil und Variieren der Reihenfolge eines Synonyms für den zumindest einen Textbestandteil und eines anderen Textbestandteils des Satzes,

wobei jede Formulierungsalternative für den Text grammatikalisch richtig ist und den im wesentlichen gleichen Sinn wie der Text hat, wobei jeder Reihenfolge und jedem ermittelten Synonym bestimmte Teilinformationen zugeordnet sind;

einer Einrichtung zum Auswählen einer Formulierungsalternative aus der Mehrzahl von Formulierungsalternativen, derart, daß die Teilinformationen, die der ausgewählten Formulierungsalternative zugeordnet sind, zumindest einem Teil der zu verbergenden Informationen entsprechen; und

einer Einrichtung zum Ausgeben der Formulierungsalternative, die einen modifizierten Text bildet, wobei in dem modifizierten Text die zu verbergenden Informationen verborgen sind.

Die "Teilinformationen" sind in einem bevorzugten Ausführungsbeispiel Kompressions-Symbole, denen direkt binäre Codes zugeordnet sein können. Der modifizierte Text hat somit den im wesentlichen gleichen Sinn wie der ursprüngliche Text. Dieser Sinn ist jedoch im modifizierten Text anders formuliert, wobei die geheimen Informationen in der - grammatikalisch richtigen - Formulierung stecken.

Gemäß einem zweiten Aspekt betrifft die vorliegende Erfindung eine Vorrichtung zum Extrahieren von in einem modifizierten Text verborgenen Informationen, wobei der modifizierte Text zumindest einen Satz aufweist, mit folgenden Merkmalen:

einer Einrichtung zum Liefern des modifizierten Textes;

einer Einrichtung zum sprachlichen Analysieren des modifizierten Textes, um Textbestandteile des modifizierten Textes zu liefern, wobei die Textbestandteile Bestandteile des Satzes sind, und wobei der Satz neben zumindest einem weiteren Bestandteil als Bestandteil genau ein Prädikat aufweist;

einer Einrichtung zum Liefern von Teilinformationen, die der Reihenfolge der Textbestandteile und, falls der modifizierte Text in sprachlichen Bedeutungen der Textbestandteile verborgene Informationen hat, den sprachlichen Bedeutungen der Textbestandteile zugeordnet sind, wobei die Einrichtung zum Liefern von Teilinformationen die gleichen Teilinformationen liefert, die bei dem Verbergen der Informationen, um den modifizierten Text zu erzeugen, der Reihenfolge der Textbestandteile und gegebenenfalls den sprachlichen Bedeutungen der Textbestandteile zugeordnet waren;

einer Einrichtung zum Kombinieren der Teilinformationen, die für den modifizierten Text durch die Einrichtung zum Liefern von Teilinformationen geliefert wurden, um die in dem modifizierten Text verborgenen Informationen zu erhalten; und

einer Einrichtung zum Ausgeben der verborgenen Informationen.

Anders ausgedrückt analysiert die Vorrichtung zum Extrahieren der geheimen Informationen den modifizierten Text und extrahiert die geheimen Informationen durch Ermitteln der Teilinformationen, die den einzelnen Formulierungsalternativen zugeordnet sind. Um eine sinnvolle Extraktion zu erreichen, ist es selbstverständlich erforderlich, daß die Vorrichtung zum Extrahieren die Zuordnung von Teilinformationen zu Wortstellungsalternativen, Synonymen oder Paraphrasen kennt, die in der Vorrichtung zum Verbergen verwendet wurden. Allerdings ist es nicht erforderlich, daß die Vorrichtung zum Extrahieren den ursprünglichen Text, der modifiziert worden ist, kennt, da die Teilinformationen unabhängig von einem Text den Textbestandteilen bzw. der Reihenfolge derselben entsprechen und nicht auf einen spezifischen Text bezogen sind, der immer aus einer Kombination bestimmter Textbestandteile besteht.

Ein wesentlicher Vorteil der vorliegenden Erfindung besteht darin, daß jeder beliebige natürlichsprachliche Text verwendet werden kann. Das erfindungsgemäße Konzept ist daher nicht auf vordefinierte Grammatiken und ähnliches begrenzt. Damit entfällt das Verdacht-erzeugende Kommunizieren mittels im wesentlichen ähnlicher Texte.

Ein weiterer Vorteil der vorliegenden Erfindung besteht darin, daß das erfindungsgemäße Konzept gegenüber Textformatierungen völlig unempfindlich ist. So könnte beispielsweise ein modifizierter Text ausgedruckt werden oder sogar per Hand abgeschrieben werden und auf irgendeine Art und Weise zu einem Empfänger übertragen werden, der die grammatikalischen und lexikalischen Informationen des Senders kennt, der die unter Umständen sogar handgeschriebenen Notizen einfach einscannt, um so den modifizierten Text in seine Vorrichtung zum Extrahieren einzuspeisen.

Die erfindungsgemäße Vorrichtung ist ferner gegenüber leichten Modifikationen des Text an sich, beispielsweise wenn Tippfehler korrigiert werden, einfache Artikelfehler korrigiert werden, Singular/Plural-Endungen modifiziert werden, usw. robust.

Je nach Ausführungsform der erfindungsgemäßen Vorrichtung und des erfindungsgemäßen Verfahrens wird lediglich die Reihenfolge der Textbestandteile selbst variiert, und es werden keine Synonyme ermittelt, um noch mehr Informationen in dem Text zu verbergen. Alternativ können für alle Textbestandteile Synonyme ermittelt werden, wobei dann statt der Reihenfolge der Textbestandteile die Reihenfolge der Synonyme für die Textbestandteile variiert wird. Schließlich ist es auch möglich, nur für einen Teil der Textbestandteile des Satzes Synonyme zu ermitteln, um dann die Reihenfolge der Textbestandteile bzw. der für bestimmte Textbestandteile ermittelten Synonyme zu variieren.

Wie später ausgeführt, können sogar beim Komprimieren der geheimen Daten steganographische Verfahren anwendet werden, die mit den Verfahren der textuellen Steganographie kombiniert werden können: Entweder um bei Änderungen eine größere Robustheit oder eine leichte Erkennbarkeit dieser Änderungen zu erreichen oder um die Menge der verbergbaren Daten zu erhöhen. Wird jedoch lediglich die Reihenfolge der Textbestandteile zum Verbergen von Informationen verwendet, so ist selbstverständlich eine Umformulierung im Sinne anderer Synonyme ohne Einfluß auf den Erfolg der Vorrichtung zum Extrahieren. Allerdings sinkt hier die Bandbreite, d. h. die Menge der Informationen, die in dem Text verborgen werden können, erheblich. Somit existiert ein Kompromiß zwischen einerseits Robustheit des modifizierten Textes gegenüber Änderungen und andererseits möglicher Bandbreite, wobei dieser Kompromiß je nach Benutzeranforderung gefunden werden kann.

Bevorzugterweise sind die zu verbergenden Informationen in Form einer Binärsequenz gegeben.

Um diese Binärsequenz in dem Text verbergen zu können, sind die Teilinformationen, die den einzelnen Alternativen zugeordnet sind, vorzugsweise ebenfalls Binärdaten, die als Codewörter bezeichnet werden können. Daher ist zu sehen, daß generell gesagt die Vorrichtung zum Verbergen von Informationen prinzipiell eine Decodierung verkörpert, wobei die geheimen Informationen in einen modifizierten Text decodiert werden, wobei der ursprüngliche Text die Codierumstände bzw. den Codierwortschatz festlegt. Analog dazu führt die Vorrichtung zum Extrahieren der Informationen einen Codierschritt aus, wobei der modifizierte Text gemäß den Teilinformationen als "Codierwortschatz" in eine binäre Sequenz codiert wird, die die extrahierten geheimen Informationen umfaßt.

Hierfür können beliebige Codiertechniken verwendet werden, von denen hier lediglich beispielshaft die Technik der arithmetischen Codierung und die Technik der Huffman-Codierung genannt seien.

Ein weiterer Vorteil des erfindungsgemäßen Konzepts besteht darin, daß seine Anwendung sehr flexibel ist. Sollen beispielsweise Informationen in einem Text verborgen werden, um den Text mit einem Wasserzeichen zu versehen, so dürfte das Ermitteln von Synonymen generell ausscheiden, da die Textbestandteile selbst zum Wasserzeichen beitragen und eine Ersetzung eines Textbestandteils durch ein Synonym u. U. das Wasserzeichen zerstören könnte. Wenn das Wasserzeichen dagegen lediglich über die Variation der Reihenfolge der Textbestandteile selbst, welche unverändert sind, in den Text eingebracht wird, so ist die Wahrscheinlichkeit zumindest größer, daß das Wasserzeichen durch solche Modifikationen des Textes nicht beeinträchtigt wird.

Für Wasserzeichen-Anwendungen als Spezialfall der Steganographie wird es nicht so sehr auf die Menge der zu verbergenden Informationen ankommen, sondern eher darauf, daß ein Wasserzeichen überhaupt nicht von außen vermutet wird. Wenn es dagegen mehr auf die Menge an Informationen ankommt, die in dem Text zu verbergen sind, so kann das erfindungsgemäße Konzept um die Synonymermittlung ergänzt werden, derart, daß im Gegensatz zur bekannten Synonymersetzung alleine auch die Reihenfolge der Synonyme aller Textbestandteile oder nur eines bestimmten Anteils der Textbestandteile variiert wird. Wenn eine bestimmte Anzahl von Synonymen vorhanden ist, so wird die Variation der Reihenfolge der Synonyme im Vergleich zur alleinigen Synonymbildung die Menge an Informationen, die in dem Text verborgen werden können, beträchtlich erhöhen.

Ein weiterer Vorteil der vorliegenden Erfindung besteht darin, daß sie auch dort anwendbar ist, wo eine Synonymersetzung per se ausgeschlossen ist. Um dennoch Informationen z. B. in Form eines Wasserzeichens in einem Text zu verbergen, wird erfindungsgemäß nur die Reihenfolge der Bestandteile von Sätzen variiert. Für die meisten Autoren und Verlage gerade im Bereich der Fachliteratur ist eine Synonymersetzung inakzeptabel, denn dann könnten Fachwörter eines Spezialgebiets durch vermeintliche Synonyme ersetzt werden.

Auch die anderen Techniken der Steganographie kommen meist nicht in Frage, da sie zu leicht entfernt werden können oder zu leicht bemerkt werden. Dies trifft gerade für Texte im sog. "Open-eBook"-Format zu. Hier sind leichte Variationen in den Buchstabenpositionen, wie es etwa für PDF-Dokumente bekannt ist, nicht möglich, da es sich um einfache Texte handelt, die kein Microspacing haben. Somit erlaubt die erfindungsgemäße Variation der Satzbestandteilreihenfolge auch in diesen bisher von der Steganographie ausgeschlossenen Bereichen die Redundanz eines Textes für ein digitales Wasserzeichen z. B. zu Urheberrechtsschutzwecken gegen Piraterieangriffe zu verwenden. Mit Hilfe der vorliegenden Erfindung läßt sich die Anzahl der in einem Textabschnitt verbergbaren Informationen erst so weit erhöhen, daß ein Wasserzeichen sinnvoll wird. Es wird nämlich bevorzugt, in jedem längeren Absatz z. B. die komplette Autoren-ID zu speichern, was normalerweise eine Bandbreite von mindestens 2 Bytes erfordert.

Bevorzugte Ausführungsbeispiele der vorliegenden Erfindung werden nachfolgend bezugnehmend auf die beigefügten Zeichnungen detailliert beschrieben. Es zeigen:

Fig. 1    ein schematisches Blockdiagramm einer erfindungsgemäßen Vorrichtung zum Verbergen;

Fig. 2    ein schematisches Blockdiagramm einer erfindungsgemäßen Vorrichtung zum Extrahieren;

Fig. 3    ein Ablaufdiagramm zur Alternativengenerierung für eine Phrase gemäß einem bevorzugten Ausführungsbeispiel der vorliegenden Erfindung; und

Fig. 4    ein Ablaufdiagramm zur Veranschaulichung der Behandlung einzelner Alternativen gemäß der vorliegenden Erfindung.

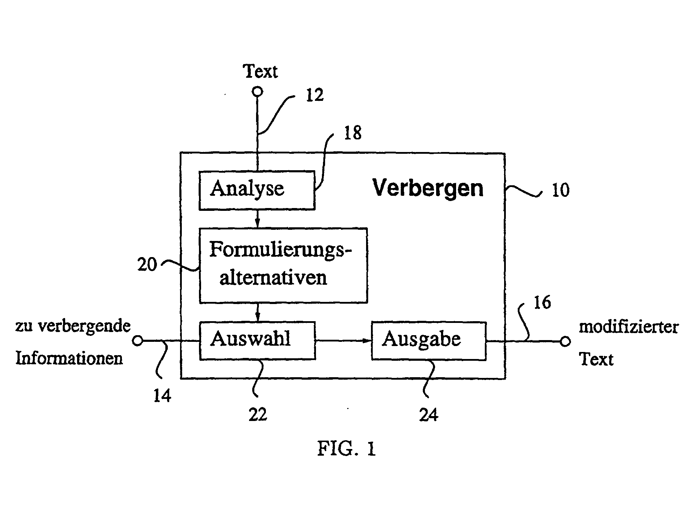

Fig. 1 zeigt ein Blockdiagramm einer erfindungsgemäßen Vorrichtung 10 zum Verbergen von Informationen in einem Text, der über einen Texteingang 12, d. h. eine Einrichtung zum Liefern des Textes, zugeführt wird. Die Vorrichtung 10 zum Verbergen von Informationen umfaßt ferner einen weiteren Eingang 14 für die zu verbergenden Informationen sowie einen Ausgang 16 für einen modifizierten Text, der sinngemäß dem ursprünglichen Text entspricht, in dem jedoch die zu verbergenden Informationen enthalten sind.

Die Vorrichtung 10 zum Verbergen von Informationen umfaßt ferner eine Einrichtung 18 zum sprachlichen Analysieren des Textes, um Textbestandteile zu liefern. Diese Textbestandteile können einer Einrichtung 20 zum Bestimmen einer Mehrzahl von Formulierungsalternativen für den Text zugeführt werden. Eine Einrichtung 22 zum Auswählen einer Formulierungsalternative aus der Mehrzahl von Formulierungsalternativen ist angeordnet, um die Formulierungsalternative auszuwählen, deren Teilinformationen den zu verbergenden Informationen entspricht. Der Einrichtung 22 zum Auswählen einer Formulierungsalternative ist eine Einrichtung 24 zum Ausgeben der Formulierungsalternative, die den modifizierten Text bildet, nachgeschaltet, um den modifizierten Text an dem Ausgang 16 auszugeben.

Im nachfolgenden wird auf die einzelnen Elemente der Vorrichtung 10 zum Verbergen von Informationen in einem Text eingegangen.

Die Einrichtung 18 zum Analysieren des Textes, um Textbestandteile zu liefern, ist angeordnet, um ein sogenanntes "Parsing"-Verfahren durchzuführen. Vorzugsweise ist die Einrichtung 18 zum sprachlichen Analysieren des Textes ein sogenannter HPSG-Parser (HPSG = Head-driven Phrase Structure Grammar). Das Standardwerk zu dessen Realisierung ist Pollard and Sag: "Head driven Phrase Structure Grammar", University of Chicago Press, 1994. Neben dem HPSG-Parser sind in der Technik viele andere Parser bekannt, die ebenfalls bei der vorliegenden Erfindung zum Einsatz kommen können. Insbesondere HPSG-Parser sind moderne hochlexikalisierte unifikationsbasierte Parser. Vorzugsweise arbeiten solche Einrichtungen satzweise. Allgemein gesagt wird, wie es später erläutert wird, der Text in seine linguistischen Textbestandteile zerlegt, wobei zunächst der Kopf des Satzes, der üblicherweise das Verb ist, ermittelt wird, um anschließend andere Konstituenten des Satzes, etwa ein Subjekt, Komplemente und Adjunkte, zu bestimmen. Die größten Vorteile eines unifikationsbasierten Parsers für HPSG gegenüber anderen Parsern sind, daß (a) die gleichen Spezifikationen für Analyse (eines Ausgangssatzes) und Generation (der umformulierten Sätze) verwendet werden (b) es nur etwa ein Dutzend Parseregeln pro Sprache gibt - alles andere ist deklarativ spezifiziert im Lexikon, erfordert wenig Programmieraufwand und läßt sich leicht auf andere Sprachen übertragen (c) Informationen von verschiedenen linguistischen Ebenen / Bereichen (Syntax, Semantik, Pragmatik) leicht kombiniert werden können. Hieraus ergibt sich die sehr enge Kopplung zwischen Parser und einem inhaltlich reichhaltigen Lexikon, vorzugsweise basierend auf dem Formalismus der getypten Merkmalstrukturen. Ein solcher Parser liefert die syntaktische oder sogar die semantische Struktur eines Satzes als Baum oder Graphstruktur. Bzgl. der Satzstellung werden zusammengehörige Wörter als solche identifiziert. Informationen zur Konstituenten-Reihenfolge (also der Satzstellung) können direkt für Kopfeinträge zusammen mit semantischen Informationen lexikalisch spezifiziert sein, insbesondere bei Verben. Dies dient dazu, sehr frühzeitig viele Parsingalternativen auszuschließen. Parsingalternativen müssen ausgeschlossen werden, die Formulierungsalternativen ergeben, die grammatikalisch falsch sind. Ferner ist es für das steganographische Konzept der vorliegenden Erfindung entscheidend, daß der modifizierte Text den im wesentlichen gleichen Sinn wie der ursprüngliche Text hat.

Stefan Müller: "Scrambling in German - Extraction into the mittelfeld", Proceedings of the tenth Pacific Asia Conference on Language, Information and Computation, City University of Hong Kong, 1995 beschreibt, wie man fürs Deutsche Regeln bzw. Constraints zur Wortstellung in HPSG-Systemen ableitet. Gregor Erbach: "Ambiguity and linguistic preferences" in "H. Trost (ed.): Feature Formalisms and Linguistic Ambiguity", Ellis-Horwood, 1993 beschreibt, wie man solchen Wortstellungsalternativen so Wahrscheinlichkeiten zuordnen kann, daß sie dem realen Sprachgebrauch sehr nahe kommen.

Ein HPSG-Parser ist ein Spezialfall eines unifikationsbasierten Parsers, der mit getypten Merkmalstrukturen arbeitet. Ein HPSG-Parser benötigt zwingend Lexikon- und Grammatik-Komponenten zum Arbeiten, Lexika und Grammatik bilden eine Einheit, außerdem gibt es einige wenige Regeln, in HPSG "Schemata", "Prinzipien", "lexikalische Regeln" genannt. Auch andere Parser, die nur Regeln benötigen, oder die nicht mit getypten Merkmalstrukturen, sondern mit fast beliebigen anderen Datenstrukturen arbeiten, und/oder die Statistiken berücksichtigen können oder nicht, können für die vorliegende Erfindung eingesetzt werden.

Die Einrichtung 20 zum Bestimmen einer Mehrzahl von Formulierungsalternativen für den Text kann eng mit dem HPSG-Parser gekoppelt sein. Vorzugsweise besteht die Einrichtung 20 aus zwei Teilkomponenten: Erstens einer Lexikon/Grammatik-Stufe und zweitens einer Komponente zur Generierung der möglichen Satzstellungs- und Formulierungsalternativen aus einer Menge von Regeln oder Constraints, die zuvor durch Lexikonzugriff und/oder Parsing ermittelt wurden. Ersetzungen durch äquivalente Phrasen können relativ einfach durch Zugriff auf ein Synonymlexikon vorgenommen werden, und Texte können aufgrund der kopfgesteuerten Vorgehensweise sehr effizient komprimiert werden: Die Vorhersagbarkeit für die nächsten zu komprimierenden Daten ist so sehr hoch. Beim Ersetzen der Synonyme gibt es zwei gängige Alternativen: Entweder man benutzt ein Vollformenlexikon, das alle gängigen flektierten Formen enthält. Beispiel: "läuft" ist synonym zu "geht". In einer anderen Variante sind nur Grundformen gleichgesetzt. Beispiel: "laufen" ist synonym zu "gehen". Hier wird zusätzlich eine morphologische Komponente benötigt, die im Beispiel "läuft" analysiert als "3. Person Singular von laufen", und aus "3. Person Singular von gehen" "geht" generiert. Lösungen hierzu sind in der Technik wohlbekannt als regelbasierte Morphologie, Zwei-Ebenen-Morphologie oder Morphologie mit endlichen Zustandsmengen.

Gemäß der vorliegenden Erfindung dient die Einrichtung 20 zum Bestimmen einer Mehrzahl von Formulierungsalternativen dazu, Möglichkeiten für den modifizierten Text zu schaffen. Dies kann insbesondere durch Variieren der Reihenfolge der Textbestandteile und/oder durch Verwenden von Synonymen für die Textbestandteile erreicht werden. Im Sinne dieser Erfindung ist ein Synonym nicht nur als Synonym für ein einzelnes Wort sondern auch als Paraphrase, also Synonym für einen Textbestandteil, d. h. eine Gruppe mit mindestens einem Wort, aufzufassen. Hat ein Textbestandteil mehrere Worte, so kann eine Paraphrase für diesen Textbestandteil weniger oder mehr Worte aufweisen, jedoch unter der Einschränkung, daß der Sinn des Textbestandteils nicht wesentlich verändert wird. Das Maß der Ähnlichkeit bzw. der Abweichung läßt sich leicht beurteilen, wenn Wörter semantischen Konzepten in einer semantischen Hierarchie (also einer Ontologie) zugeordnet sind und Knoten mit Gewichten und Kanten mit dem Grad der Ähnlichkeit der verbundenen Knoten gekennzeichnet sind.

Eine einfache Formulierungsalternative eines Satzes besteht darin, daß lediglich die Reihenfolge der Textbestandteile geändert wird. Bei den meisten Sätzen erlaubt die Grammatik mehrere verschiedene Satzstellungen. Jeder Satzstellung wird eine eindeutige Teilinformation zugeordnet: In bevorzugten Ausführung handelt es sich hierbei um Symbolcodes - wie schon im Abschnitt der Synonyme ausgeführt. Ein Ansatz ist es von der sogenannten kanonischen Reihenfolge oder Normal-Reihenfolge auszugehen. So könnte in der kanonischen Reihenfolge zunächst das Subjekt kommen, dem das Verb folgt, dem wiederum ein Adverb folgt, dem wiederum weitere eventuell noch vorhandene Satzbestandteile nachgeordnet sind. Ein Beispiel ist das Englische: Die hier geltende Satzstellungsregel "Subjekt - Prädikat - Objekt" könnte eine der kanonisierenden Regeln für andere Sprachen wie das Deutsche sein. Jede andere Satzstellung könnte dann als x-te Permutation dieser kanonischen Reihenfolge kodiert werden. Dieses Konzept der kanonischen Reihenfolge läßt sich verallgemeinern: Es reicht, jeder Satzstellung immer wieder den gleichen Code zuordnen zu können - egal in welcher Satzstellung sich der Eingabesatz befindet. Dazu muß die kanonische Reihenfolge nicht generiert werden. Vielmehr reicht es, wenn die Information benutzt wird, mit deren Hilfe grundsätzlich diese kanonische Reihenfolge erzeugt werden kann. In einer beispielhaften Realisierung könnte dies ein Regelsystem sein: In jeder Situation werden alle sich ergebenden Zustände nach Regelanwendung gleichartig durchnumeriert. Der Code für die gesamte Satzstellung könnte sich durch Konkatenation der so für jeden Schritt der Regelanwendung ergebenden Codes entstehen. Diese Konkatenation kann wiederum nach allen aus der Datenkompression bekannten Varianten erstellt werden: Durch arithmetische, bitweise, byteweise, wortweise Verkettungen - möglicherweise mit Elimination von Redundanzen.

An dieser Stelle sei darauf hingewiesen, daß der Ausdruck "Satz" im Sinne der vorliegenden Erfindung dahingehend zu verstehen ist, daß sämtliche grammatikalischen Konstruktionen, welche genau ein Prädikat und zumindest einen weiteren Bestandteil aufweisen, als Satz zu verstehen sind. Damit sind sowohl Hauptsätze als auch Nebensätze im Sinne der vorliegenden Erfindung jeweils für sich gesehen ein Satz, da ein Hauptsatz, genauso wie ein Nebensatz, immer genau ein einziges Prädikat aufweist, und darüberhinaus einen weiteren Bestandteil, der beispielsweise das Subjekt oder das Objekt sein könnte.

Erfindungsgemäß werden daher im Gegensatz zum Stand der Technik nicht nur Sätze, also grammatikalische Konstruktionen mit genau einem Prädikat und mindestens einem weiteren Bestandteil, untereinander umgestellt, sondern es können alle grammatikalisch akzeptablen Satzumstellungen innerhalb einer solchen grammatikalischen Konstruktion, wie z. B. eines Hauptsatzes oder eines Teilsatzes, auf der Ebene der kleinsten grammatikalisch korrekt umstellbaren Konstituenten durchgeführt werden.

Solche kleinste grammatikalisch korrekt umstellbare Konstituenten, also Bestandteile des Satzes können Artikel-Nomen-Komplexe (z. B. das Haus), Artikel-Adjektive/Adverbien/Partizipien-Nomen-Komplexe (z. B. das schöne, entlegene, ..., braune Haus), ein Prädikat, ein direktes Objekt, ein indirektes Objekt, eine adverbiale Bestimmung (z. B. Zeit, Ort, Umstand, usw), Präpositional-Phrasen (z. B. "vor dem Haus") sowie Pronomial-Phrasen (z. B. meines Freundes) umfassen.

Die Aufteilung bzw. sprachliche Analyse eines Satzes in seine Bestandteile, mittels deren Reihenfolge Informationen in dem Text verborgen werden, kann rekursiv erfolgen, indem erst der gesamte Satz aufgeteilt wird, und indem dann für die einzelnen Haupt- und Gliedsätze einzelne Konstituenten bestimmt werden.

Durch Nutzen einer gemeinsamen Baumstruktur für den vorzugsweise verwendeten Parse-Baum der Konstituenten und eines Huffman-Baumes muß keine weitere Datenstruktur dynamisch aufgebaut werden. Dies spart gleichzeitig Speicherplatz und Rechenzeit.

Je nach Anwendungsfall ist die Tiefe der Aufteilung, d. h. wieviele Bestandteile eines Satzes ermittelt werden und in ihrer Reihenfolge verändert werden, von der Menge der in dem Text zu verbergenden Informationen abhängig. Es muß also nicht bei jeder Anwendung des erfindungsgemäßen Konzepts der Satz in seine sämtlichen kleinsten umstellbaren Bestandteile zerlegt werden. Vielfach dürfte auch eine Umstellung der Reihenfolge von Gruppen von kleinsten Bestandteilen innerhalb eines Satzes genügen.

Falls die Einrichtung 18 zum Analysieren (Fig. 1) und die Einrichtung 20 zum Liefern von Formulierungsalternativen (Fig. 1) angeordnet sind, um Paraphrasen zu verarbeiten, so können auch Mehrwortsynonyme verarbeitet werden. Eine Paraphrase ist z. B. die bekannte Redewendung "die Flinte ins Korn werfen". Ein Synonym dafür ist das Wort "aufgeben". In dem Satz "Der Schüler warf wegen Latein die Flinte ins Korn."

können somit bereits mindestens 2 Bits an Informationen mittels folgender Formulierungsalternative verborgen werden:
"Wegen Latein gab der Schüler auf."

Ein erstes Bit steckt hierbei im Synonym "aufgeben" - "die Flinte ins Korn werfen". Das zweite Bit steckt in der Stellung des Satzbestandteils "wegen Latein" vor oder nach dem. Prädikat. Aus diesem Beispiel wird klar, daß der Ausdruck "Synonym" im Hinblick auf die vorliegende Erfindung nicht nur "ein Wort für ein anderes Wort" bedeutet, sondern auch sog. Mehrwortsynonyme umfaßt, bei denen eine Wortgruppe durch ein einziges Wort oder umgekehrt ersetzt werden kann.

Auch adjektivische, adverbiale, präpositionale Ergänzungen und direkte/indirekte Objekte lassen sich jeweils untereinander umstellen. Es ist also nicht unbedingt erforderlich, daß die Reihenfolge, beispielsweise des Subjekts zum Prädikat oder des Objekts zum Prädikat, verändert wird, wenn Informationen auch über direkte/indirekte Objekte oder adjektivische, adverbiale oder präpositionale Ergänzungen verborgen werden können.

Bei einem bevorzugten Ausführungsbeispiel der vorliegenden Erfindung, das nicht nur auf ein Variieren der Reihenfolge der Textbestandteile aufbaut, sondern ebenfalls Synonyme verwendet, kann die Einrichtung zum Bestimmen einer Mehrzahl von Formulierungsalternativen auf die Lexikon/Grammatik-Stufe zugreifen, um für ein Wort gleichbedeutende Synonyme zu ermitteln. Jedem dieser Synonyme sind ebenfalls eindeutige Teilinformationen zugeordnet, durch die das Synonym von einem anderen Synonym eindeutig unterschieden werden kann. In einer bevorzugten Ausführung sind diese Teilinformationen Symbole im Sinne der Datenkompression, denen direkt im Lexikon Bitcodes (Huffman Codierung) oder Wahrscheinlichkeitsintervalle (Arithmetische Codierung) zugeordnet sind oder zugeordnet werden können.

Vorzugsweise ist die Einrichtung 18 zum sprachlichen Analysieren angeordnet, um keine Textbestandteile zu liefern, für die die Korrektheit der Umformulierung nicht garantiert werden kann. Ferner ist die Einrichtung 20 zum Bestimmen von Formulierungsalternativen angeordnet, um nur solche Formulierungsalternativen anzubieten, für die sichergestellt ist, daß bei deren Analyse wieder der gleiche Satz von Formulierungsalternativen erhalten werden kann. Wird beispielsweise das Wort "Mutter" im zu modifizierenden Text betrachtet, so könnte es eine leibliche Mutter oder eine Schrauben-Mutter bezeichnen. Falls der Kontext nicht eindeutig z. B. der Maschinenbau ist, würde die Einrichtung zum sprachlichen Analysieren bei diesem Ausführungsbeispiel den Textbestandteil "Mutter" überhaupt nicht liefern und darauf verzichten, in ein Synonym zu "Mutter" zu verbergende Informationen zu verstecken. Analog dazu würde die Einrichtung 20 zum Bestimmen der Mehrzahl von Formulierungsalternativen "Mutter" nicht als Synonym für einen Textbestandteil anbieten, falls der Kontext nicht eindeutig ist.

Die Flexibilität des Konzepts gemäß der vorliegenden Erfindung kann an die spezifischen Benutzeranforderungen beliebig angepaßt werden, indem die Einrichtung 20 zum Bestimmen einer Mehrzahl von Formulierungsalternativen eine bestimmte Anzahl von Synonymgruppen umfaßt. Wird die Anzahl der Synonymgruppen erhöht, so kann in einem gegebenen Text eine größere Menge von Geheiminformationen verborgen werden. Da im Gegensatz zum Stand der Technik das Konzept der vorliegenden Erfindung auf beliebige Texte anwendbar ist, müßte zum Erreichen einer maximalen Menge von zu verbergenden Informationen in einer begrenzten Menge an Text die Einrichtung 20 zum Erzeugen von Formulierungsalternativen für jedes beliebige Wort eine entsprechende Anzahl von Synonymen bereitstellen können. Da jedoch die Anzahl der möglichen Wörter in einer Sprache sehr groß werden kann, ist es unwahrscheinlich, daß die Einrichtung 20 zum Bestimmen einer Mehrzahl von Formulierungsalternativen für jedes beliebige Wort Synonyme erzeugen kann bzw. gespeichert hat. Trifft dieselbe auf ein Wort, für das es keine Synonyme hat, so wird sie dieses Wort einfach unverändert lassen. Die Einrichtung 20 kann dann selbstverständlich auch keine Teilinformationen bestimmen, da keine Teilinformationen für dieses Wort vorhanden sind. Daher wird dieses Wort nicht dazu verwendet werden können, zu verbergende Informationen "aufzunehmen". Untersuchungen haben jedoch gezeigt, daß die Anzahl der tatsächlich verwendeten Wörter im großen und ganzen relativ begrenzt ist, weshalb bei durchschnittlichen Texten, wie sie beispielsweise zum Übermitteln von Geschäftsdaten eingesetzt werden, in begrenztem Aufwand Synonyme für nahezu alle dort auftretenden Worte lieferbar sind. Hier liegt gerade eine Stärke der vorliegenden Erfindung, derart, daß durch weiteres Aufnehmen von Synonymgruppen in die Einrichtung zum Bestimmen von Formulierungsalternativen die erfindungsgemäße Vorrichtung beliebig "aufgerüstet" werden kann und somit je nach Anwendungsgebiet und Marktbedürfnissen maßgeschneidert werden kann. Weiterhin kann man komplette Synonymwörterbücher lizenzieren und es sind auch eine Reihe von Verfahren bekannt, wie man Synonyme automatisch aus einer großen Sammlung von Texten lernt.

Die Einrichtung 22 zum Auswählen einer Formulierungsalternative aus der Mehrzahl von Formulierungsalternativen, derart, daß die Teilinformationen, die der ausgewählten Formulierung zugeordnet sind, den zu verbergenden Informationen entsprechen, arbeitet allgemein gesprochen wie ein Decodierer oder Dekomprimierer.

Der "Wortschatz" für das Dekomprimieren der zu verbergenden Informationen, d. h. die zu verbergenden Informationen haben üblicherweise eine höhere Informationsdichte als der modifizierte Text. Hinzu kommt, daß Synonyme in Gruppen von möglichst vielen Wörtern mit untereinander gleicher oder ähnlicher Bedeutung - Synonymmengen - angeordnet werden, so daß die Auswahl eines Synonyms einen möglichst hohen Informationsgehalt darstellt.

Diese Auswahl der Alternativen wird durch die Einrichtung 22 zum Auswählen durchgeführt und wird durch die Einrichtung 20 zum Bestimmen einer Mehrzahl von Formulierungsalternativen für den Text bereitgestellt, wobei der Wortschatz gemäß der vorliegenden Erfindung grundsätzlich durch den Ausgangstext, d. h. den am Eingang 12 zugeführten Text, bestimmt wird, derart, daß im Gegensatz zum Stand der Technik, der lediglich einfache vordefinierte Grammatikstrukturen verwendet, beliebige Texte zum Verbergen von Informationen genommen werden können. In einer bevorzugten Variante bestimmt sich der Wortschatz für die Umformulierung exakt aus der Menge der Synonyme für die Worte im Ausgangstext. Eine wesentliche Eigenschaft ist die Reflexivität der Synonym-Relation: Ist x synonym zu y, so ist auch umgekehrt y synonym zu x.

Bei einem bevorzugten Ausführungsbeispiel der vorliegenden Erfindung arbeitet die Einrichtung 22 als arithmetischer Decodierer oder Dekompressor, während dieselbe bei einem anderen bevorzugten Ausführungsbeispiel der vorliegenden Erfindung als bitbasierter Decodierer bzw. Dekompressor arbeitet. In diesem Fall werden zu verbergende Informationen als Binärdaten behandelt. Wenn die zu verbergenden Informationen Textdaten, d. h. Buchstaben oder Zahlen, sind, werden dieselben vorzugsweise mittels eines üblichen Komprimierungsprogrammes komprimiert, wobei solche in der Technik bekannten Komprimierer bereits Bitdaten ausgeben.

Im Falle der arithmetischen Ausführung werden die zur Verfügung stehenden Alternativen, die von der Einrichtung 20 zur Verfügung gestellt werden, als "Kontext" bezeichnet, während dieselben im Falle einer bitbasierten Ausführung als "Wörterbuch" behandelt werden. Diese Begriffe sind in der Literatur üblich. Gemeinsam ist beiden, daß sie aus Paaren bestehen, die auf Symbol-Wahrscheinlichkeitspaaren beruhen. Im Falle der bitbasierten Kodierung werden die Wahrscheinlichkeiten p durch Codes der Länge des negativen Zweierlogarithmus von p "-ld(p)" - jeweils gerundet - dargestellt.

Damit beliebige zu verbergende Informationen verarbeitet werden können, derart, daß sie eine gültige Formulierungsalternative ergeben, müssen die Teilinformationen, die den Wortstellungsreihenfolgen und/oder den Synonymen zugeordnet sind, eine bestimmte Bedingung erfüllen. Bei einer bitbasierten Ausführung lautet die Bedingung derart, daß, falls für die Länge $l_i$ der i-ten Alternative als eine von n gleichzeitig möglichen Alternativen zu jedem Zeitpunkt folgende Bedingung erfüllt ist:

$$\sum_{i=1}^{n} 2^{-l_i} = 1{,}0$$

Bei einer Ausführung mittels arithmetischer Codierung/Decodierung muß die Gesamtsumme der Gewichte aller Alternativen bekannt sein, damit die Gewichte zu Wahrscheinlichkeiten zurückgerechnet werden können, die sich zu Eins aufsummieren.

Bezüglich der arithmetischen Codierung/Decodierung und der bitbasierten Codierung, deren prominentester Vertreter das Huffman-Codieren ist, existiert eine große Menge an Literatur. Beispielhaft sei hier "Managing Gigabytes" von Witten, Moffat und Bell, Van Nostrand Reinhold, New York, 1994, genannt. Anschauliche Beispiele und Informationen finden sich ebenfalls in "The Data Compression Book", von Nelson und Gailly, M & T Books.

Zum Verständnis der vorliegenden Erfindung sei jedoch auf den Grundgedanken der arithmetischen Codierung/Decodierung eingegangen. Im Gegensatz zur Huffman-Codierung erlaubt die arithmetische Codierung eine beliebige Anpassung an die in einem Text vorliegende Entropie, während bei der Huffman-Codierung zumindest ein Bit pro Symbol vergeben werden muß.

Die meisten Datenkompressionsverfahren passen während des Komprimierens laufend interne Statistiken an, um die zu erwartenden Daten möglichst exakt abschätzen zu können. Hierzu wird jedem Bestandteil ein Bereich oder eine Gewichtung zugewiesen, dessen Breite der Wahrscheinlichkeit entspricht. Bei allgemeinen Codierverfahren muß die Gesamtwahrscheinlichkeit kleiner oder gleich 1,0 sein. Für die hier beschriebenen steganographischen Codierverfahren muß jedoch zwingend gelten, daß alle Wahrscheinlichkeiten/Gewichtungsbereiche zusammen 1,0 ergeben. Dann wird mit der Codierung begonnen. Die Stärke der arithmetischen Codierung besteht gerade darin, daß ein zu codierendes Symbol auch Bruchteile einer Nachkommastelle - sprich eines Bits - belegen kann. Der aktuelle Codiererzustand wird durch die Größe eines aktuellen Intervalls repräsentiert. Bei der Codierung weiterer Zeichen wird dieses Intervall immer weiter eingeengt wie bei einer Intervallschachtelung. Allgemein gesprochen wird daher eine einzige Mantisse einer Fließkommazahl erzeugt, die eine codierte bzw. komprimierte Version der zu codierenden Eingangsdaten darstellt.

Im Decodierer wird wiederum der umgekehrte Vorgang durchgeführt. Die Einrichtung 22 zum Auswählen einer Formulierungsalternative aus der Mehrzahl von Formulierungsalternativen beginnt mit einem Intervall von 0 bis 1, d. h. dem größtmöglichen Anfangsintervall. Die zu verbergenden Informationen werden dabei, wie es bereits erwähnt wurde, als einzige Mantisse einer Fließkommazahl betrachtet. von den Bits dieser Mantisse werden vom Anfang her jeweils soviele Bits betrachtet, bis die Zahl, die diese Bits darstellen, eindeutig in einem der Wahrscheinlichkeitsintervalle liegt, die durch die Teilinformationen, die durch die Einrichtung 20 zum Bestimmen einer Mehrzahl von Formulierungsalternativen bestimmt werden, definiert sind. Die ausgewählte Alternative hat somit ein zugeordnetes fest definiertes Intervall. Dieses Intervall wird anschaulich gesprochen - allerdings erst nach evtl. mehreren Schritten - wieder auf die Breite 1 skaliert. Damit können die weiteren Bits aus dem Datenstrom der zu verbergenden Informationen wieder eine der Alternativen wählen, deren Wahrscheinlichkeiten sich zu 1 summieren. In der Praxis werden die Wahrscheinlichkeitsalternativen als ganzzahlige Werte, die Vielfache der eigentlichen Wahrscheinlichkeiten sind, verwaltet, wobei das Intervall nicht nach jedem Decodierungsschritt neu skaliert werden muß. Vielmehr werden die Intervallgrenzen so lange in einer Art Intervallschachtelung verkleinert, bis die Genauigkeit nicht mehr gewährleistet ist und neu skaliert werden muß.

Zum Zwecke der Anschaulichkeit wird im Folgenden von Codebäumen im Zusammenhang mit der Huffman-Codierung gesprochen. Tatsächlich würde man dies nicht als Baum sondern als Tabelle von präfixfreien Codes realisieren, wie dies aus der kanonischen Huffman-Codierung bekannt ist. Dies ermöglicht eine höhere Geschwindigkeit bei weniger Speicherverbrauch. Ein solcher "Codebaum" ist als Teil eines Wörterbuchs für die bitbasierte Codierung anzusehen. Ein Wörterbuch enthält darüber hinaus auch die Zuordnung der Symbole zu den Codes des "Kontextes" oder "Baumes". Präziser ist es, von Kontexten statt von Wörterbüchern und von tabellenförmigen Kontexten statt von Bäumen zu sprechen.

Bei einem anderen Ausführungsbeispiel der vorliegenden Erfindung wird statt der arithmetischen Codierung/Decodierung eine bitbasierte Codierung und insbesondere eine Huffman-Codierung verwendet. Wie es bekannt ist, kann ein einfacher Huffman-Code mittels einer Liste von Symbolen / Token und zugeordneten Häufigkeiten oder Wahrscheinlichkeiten erzeugt werden. Wenn jeder Zweig des Baums mit einem gültigen Huffman-Codewort abgeschlossen ist, können beliebige Informationen codiert/decodiert werden, sofern sie sich mit den im Codebaum gespeicherten Symbolen darstellen lassen. Diese Bedingung wurde bereits weiter vorne allgemein ausgeführt.

Im Falle der Huffman-Codierung, die weiter hinten anhand eines Beispiels detaillierter erläutert ist, sind die Teilinformationen, die den einzelnen Formulierungsalternativen, d. h. den Reihenfolgen der Textbestandteile und/oder den einzelnen Synonymen für die Textbestandteile zugeordnet sind, Huffman-Codewörter. Bei einem üblichen Huffman-Code wird zunächst der zu codierende Text statistisch analysiert, wobei das häufigste Zeichen in einem Text üblicherweise das Leerzeichen oder der Buchstabe "e" ist. Zeichen, die häufig vorkommen, werden möglichst kurze Codewörter zugeordnet, während Zeichen, die sehr selten vorkommen, eher längere Codewörter zugeordnet werden, jedoch unter der Voraussetzung, daß ein vollständiger Codebaum entsteht. Damit wird, wie es für Huffman-Codes bekannt ist, eine möglichst große Datenkompression erreicht.

Allen verschiedenen grammatikalisch möglichen Reihenfolgen von Textbestandteilen wird somit ein Huffman-Codewort zugeordnet, derart, daß die Huffman-Codewörter für die Reihenfolgen der Textbestandteile einen vollständigen Codebaum ergeben. Dasselbe trifft für die einzelnen Synonymsätze zu. So müssen die Teilinformationen, d. h. die Huffman-Codewörter, die einem Textbestandteil und den Synonymen zu diesem Textbestandteil zugeordnet sind, insgesamt einen gültigen Codebaum ergeben.

Wie es bereits ausgeführt worden ist, führt die Einrichtung 22 zum Auswählen einer Formulierungsalternative aus der Mehrzahl von Formulierungsalternativen eine Huffman-Decodierung durch. Sie erhält als Eingangssignal die zu verbergenden Informationen und bewegt sich in einem Code-Kontext, der durch die Einrichtung 20 zum Bestimmen einer Mehrzahl von Formulierungsalternativen bereitgestellt wird, gemäß der Bitsequenz der zu verbergenden Informationen soweit vor, bis ein gültiges Codewort gefunden worden ist. Daraufhin wählt die Einrichtung 22 diese Formulierungsalternative, wie beispielsweise eine bestimmte Wortstellungsreihenfolge. Anschließend kann dann der Synonym-Code-Kontext für Kopf, Subjekt, Komplemente, Adjunkte des Satzes verwendet werden. Allerdings ist zu beachten, daß die Ersetzung der Synonyme im Prinzip nur von der semantischen Kategorie und der Kontextinformation und nicht von der Wortfunktion (Subjekt, Kopf, Komplement, etc.) abhängt. Es kann deshalb mit der Ersetzung durch Synonyme in der Reihenfolge der Wörter im umgestellten Satz ausgegangen werden. Allerdings lassen sich aus der Wortfunktion häufig morphologische Kenngrößen näher eingrenzen, z. B. der Fall. Hierzu werden wieder die zu verbergenden Informationen bitweise dazu dienen, nacheinander in den jeweiligen Code-Kontexten für die Synonyme soweit fortzuschreiten, bis ein gültiges Codewort gefunden worden ist. Dieses Verfahren wird bei einem bevorzugten Ausführungsbeispiel der vorliegenden Erfindung fortgesetzt, bis ein Satz oder im größeren Stil der gesamte Text vollendet ist. Die zu verbergenden Informationen wurden dabei als eine Folge von Huffman-Codeworten aufgefaßt, die mittels verschiedener, durch die Einrichtung 20 und letztendlich durch den ursprünglichen Text bestimmten Code-Kontexte in einen modifizierten Text umgewandelt, d. h. decodiert, worden sind, der dann ausgegeben wird.

In einer bevorzugten Ausführung wird zunächst die neue Wortstellung im Datenstrom codiert, worauf dann die Codes für die Ersetzung der Synonyme folgen.

Die Einrichtung zum Bestimmen der Mehrzahl von Formulierungsalternativen kann angeordnet sein, um immer nur die eine Formulierungsalternative zu ermitteln, die durch die Einrichtung zum Auswählen aufgrund der zu verbergenden Informationen ausgewählt wird. Beispielhaft anhand eines Codebaums ausgedrückt ist es nicht notwendig, daß sämtliche Zweige verfolgt werden, sondern an einem Knoten nur immer der Zweig, der schließlich zu dem Codewort führt.

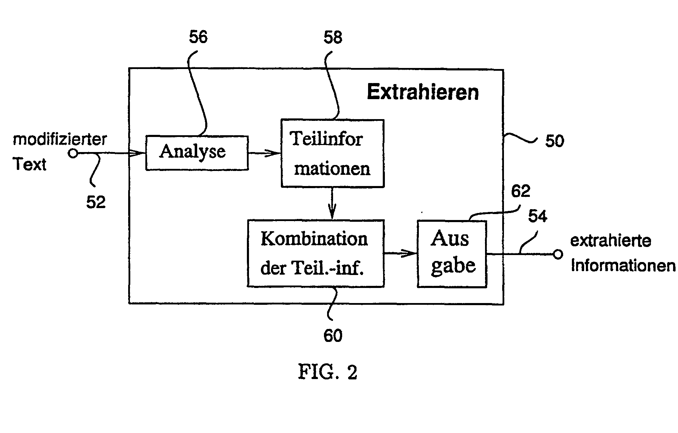

Bevor ein detailliertes Beispiel für die Funktionsweise der Vorrichtung 10 zum Verbergen von Informationen gegeben wird, sei auf Fig. 2 eingegangen, die ein schematisches Blockschaltbild einer Vorrichtung 50 zum Extrahieren von in einem modifizierten Text verborgenen Informationen darstellt. Der modifizierte Text wird über einen Eingang 52 in die Vorrichtung 50 eingespeist. Die extrahierten Informationen werden über einen Ausgang 54 ausgegeben. Die Vorrichtung 50 umfaßt wiederum eine Einrichtung 56 zur sprachlichen Analyse des modifizierten Textes, um die Textbestandteile des modifizierten Textes zu liefern. Aufgrund dieser Informationen werden die Codes für die Wortstellung zugeordnet. Die Textbestandteile werden in eine Einrichtung 58 zum Liefern von Teilinformationen eingespeist, um die Teilinformationen zu ermitteln, die den Textbestandteilen und/oder der Reihenfolge der Textbestandteile zugeordnet sind. Dazu muß die Einrichtung 58 zumindest für die durch die Analyse 56 bestimmten Textbestandteile durch die Einrichtung 10 zum Verbergen (Fig. 1) festgelegten Teilinformationen ermitteln können. Vorzugsweise enthält die Einrichtung 58 daher ebenso wie die Einrichtung 20 der Vorrichtung zum Verbergen die Lexikon/Grammatik-Stufe, die Textbestandteilreihenfolge und zugeordnete Teilinformationen sowie Synonyme und zugeordnete Teilinformationen liefern kann. Die vorzugsweise bitförmigen Teilinformationen, die auf Wahrscheinlichkeiten zurückführbar sind und die dem modifizierten Text zugeordnet sind, werden einer Einrichtung 60 zum Kombinieren der Teilinformationen, um die in dem modifizierten Text verborgenen Informationen zu erhalten, zugeführt. Je nach Implementation der Vorrichtung zum Verbergen wird die Einrichtung 60 zum Kombinieren der Teilinformationen entweder als arithmetischer Codierer oder als Huffman-Codierer oder als sonstiger Codierer abhängig von der Codiertechnik der Vorrichtung 10 ausgeführt sein. Die kombinierten Teilinformationen werden schließlich einer Einrichtung 62 zum Ausgeben der verborgenen Informationen zugeführt, damit sie an dem Ausgang 54 ausgegeben werden können. Die Ausgabevorrichtung enthält vorzugsweise, wenn die zu verbergenden Informationen komprimierte Textdaten sind, eine Dekomprimiervorrichtung, derart, daß aus der Vorrichtung 50 zum Extrahieren keine Bitdaten sondern beispielsweise Textdaten ausgegeben werden.

Im nachfolgenden wird die Funktionsweise der Vorrichtung 10 zum Verbergen von Informationen bei einer Implementation mittels Huffman-Codierung/Decodierung in der Auswahleinrichtung 22 bzw. der Kombinationseinrichtung 60 in der Vorrichtung 50 zum Extrahieren dargestellt. Der Beispielsatz lautet:

"Das Auto fährt schnell bei glatter Straße über den Hügel."

Die Einrichtung zum sprachlichen Analysieren 18 wird diesen Satz in folgende Teilphrasen zerlegen:

1: Das Auto,
2: fährt,
3: schnell,
4: bei glatter Straße,
5: über den Hügel.

Es sei darauf hingewiesen, daß der Beispielsatz bereits in der sogenannten kanonischen Reihenfolge (d. h. Subjekt, Verb, Adverb, Präpositionaladjunkte, ...) vorliegt. Die Ziffern vor den Satzbestandteilen können nun zur Kurzdarstellung der Wortstellungsalternativen verwendet werden. So steht beispielsweise "42135" für den Satz:

"Bei glatter Straße fährt das Auto schnell über den Hügel."

Diese alternative Wortstellung ist eine von der Einrichtung 20 zum Bestimmen von Formulierungsalternativen erzeugte Wortstellung, die sich von der ursprünglichen Wortstellung unterscheidet, die jedoch grammatikalisch richtig ist und den im wesentlichen gleichen Sinn wie der ursprüngliche Text ergibt. Allgemein gesagt ist das Grundprinzip bei der Generierung der Wortstellungsalternativen, daß in jeder Wortklasse, insbesondere auch in jeder Verbklasse, die zur Generierung der korrekten Wortstellungsalternativen notwendigen Informationen gespeichert sind. So kann beispielsweise die Reihenfolge der Konstituenten in den Subjekt-, den Komplement- und den Adjunkt-Attributen der jeweiligen lexikalischen Einträge in einer Lexikon/ Grammatik-Stufe zu den jeweiligen Klassen definiert werden. Die Einrichtung zum Bestimmen einer Mehrzahl von Formulierungsalternativen, die vorzugsweise ebenfalls als HPSG-System ausgeführt ist, ist dann in der Lage, die folgenden Wortstellungsalternativen regelbasiert zu erzeugen (in Klammern dahinter stehen kanonische Huffman-Codewörter für die einzelnen Textbestandteile):

12345 (111), 12435 (110), 32145 (1001), 32154 (1000), 34215 (0111), 35214 (0110), 42135 (0101), 45213 (0100), 45231 (0011), 52134 (0010), 54213 (0001), 54231 (0000) (13 Wortstellungsalternativen).

Die Binärfolgen hinter den einzelnen Wortstellungsalternativen stellen die Teilinformationen dar, die der jeweiligen Wortstellungsalternative zugeordnet sind. Es zeigt sich, daß hier ein Code-Kontext mit 13 Codewörtern verwendet wird, wobei drei Wortstellungsalternativen ein Codewort mit einer Länge von 3 Bit haben, während die restlichen 10 Wortstellungsalternativen ein Codewort mit einer Länge von 4 Bit haben.

Analog dazu wird die Lieferung einer Mehrzahl von Formulierungsalternativen für den Text durch Verwenden von Synonymen für die Textbestandteile durchgeführt. Nachfolgend sind Synonyme und in Klammern dahinter stehende kanonische Huffman-Codewörter für die einzelnen Textbestandteile dargestellt.

- Auto (111), Kraftwagen (110), Kraftfahrzeug (101), Wagen (100), Limousine (011), Personenkraftwagen (010), Pkw (0011), Automobil (0010), Fahrzeug (00011), Schese (00010), Vehikel (00001), Gefährt (00000) (12 Synonyme)

- fährt (11), rollt (10), bewegt sich fort (01), rast (001), gondelt (0001), braust (0000) (6 Synonyme)

- schnell (111), blitzartig (110), hurtig (101), rapide (1001), pfeilschnell (1000), kometenhaft (0111), blitzschnell (0110), flott (0101), pfeilgeschwind (0100), rasch (0011), rasant (0010), geschwind (00011), fix (00010), eilig (00001), flugs (00000) (15 Synonyme)

- bei (1), auf (0) (2 Wörter mit ähnlichem Sinn nur in diesem Kontext)

- glatter (11), schlittriger (10), vereister (011), spiegelglatter (010), eisglatter (0011), rutschiger (0010), schlickriger (0001), glitschiger (00001), schlüpfriger (00000) (9 Synonyme)

- Straße (11), Fahrbahn (10), Hauptstraße (011), Landstraße (010), Fernverkehrsstraße (0011), Fahrstraße (0010), Fahrweg (0001), Fahrspur (0000) (8 Synonyme)

- Hügel (11), Berg (10), Erhebung (011), Anhöhe (0101), Höhenzug (0100), Bodenerhebung (0011), Höhenrücken (0010), Steigung (00011), Höhe (00010), Buckel (00001), Höcker (00000) (11 Synonyme)

Wieder ist zu sehen, daß jede Synonymklasse einen eigenen Code-Kontext bildet, derart, daß sich für den Beispielsatz 7 Synonym-Code-Kontexte ergeben, wobei für beliebige andere Textbestandteile für beliebige andere Beispielsätze ebenfalls entsprechende Code-Kontexte durch die Einrichtung zum Bestimmen einer Mehrzahl von Formulierungsalternativen dynamisch erzeugt bzw. von einem Speicher abgerufen werden können. In einer vorzugsweisen Realisierung ist ein solcher Speicher mit einem Lexikon oder Thesaurus gekoppelt.

Aus diesem Beispiel ist zu sehen, daß häufig erwarteten oder verwendeten Synonymen vorzugsweise kürzere Codes gegeben werden als weniger häufig erwarteten Synonymen. Außerdem ist zu sehen, daß beim Auftauchen eines der Wörter dieser Synonymliste genau alle Wörter der Liste als Synonyme generiert werden müssen, damit ein vollständiger Codebaum vorhanden ist. Im vorliegenden Beispiel müßten also auch beim Auftreten von "Fahrzeug" nur genau die Auto-Synonyme generiert werden, nicht aber Wörter wie beispielsweise "Lastwagen, Motorrad, usw.". Für solche Effekte kann ein Ähnlichkeitsschwellwert vorgesehen werden, der dazu dient, eine Sinnveränderung zu eliminieren, die entstehen würde, wenn der Begriff "Auto" durch "Lastwagen" ersetzt werden würde.

Die folgende Bitsequenz, die die zu verbergenden Informationen darstellt:

0010/0011/001/0101/0/10/0101

würde den Satz

"Über die Anhöhe rast der PKW blitzschnell auf eisglatter Fahrbahn."

codieren.

Die Originalreihenfolge ohne eine Vertauschung der Stellung der Textbestandteile würde folgendermaßen lauten: "Der PKW rast blitzschnell auf eisglatter Fahrbahn über die Anhöhe". Dies würde dem binären Teil ohne das Präfix für die Wortstellung entsprechen, der in Bitdarstellung lautet:

0011/001/0101/0/10/0101

Es sei darauf hingewiesen, daß die Schrägstriche in der Bitdarstellung für die zu verbergenden Informationen nur aus optischen Gründen vorhanden sind. In der Praxis wird nichts derartiges codiert. Artikel und Groß/Kleinschreibung werden nach den jeweiligen Erfordernissen durch die Einrichtung 20 zum Bestimmen einer Mehrzahl von Formulierungsalternativen gesetzt. Zur Präposition "über" gibt es hier kein Synonym.

Deshalb bleibt sie unverändert.

Es sei darauf hingewiesen, daß wirklich jede Bitsequenz, wenn sie nicht zu lang ist, einen gültigen Satz mit ähnlicher Bedeutung erzeugt. Wird beispielsweise das 10. Bit, d. h. die zweite "0" im Symbol 001 für "rasen" eliminiert, so erhält man stattdessen "bewegt sich fort", also: "Über die Anhöhe bewegt sich der PKW blitzschnell auf eisglatter Fahrbahn fort."

Würde nun das 15. Bit, d. h. die letzte "1" im Symbol 0101 für "blitzschnell" eliminiert, so verbleibt bei der Selektierung des Adjektivs noch die Bitfolge 0100100101 im Datenstrom. Da ein Symbol 010 nicht in diesem Kontext existiert, da die Codes präfix-frei sind, muß ein Bit zur Selektion des Adjektivs hinzugenommen werden. Es wird dann das Symbol 0100 selektiert, was für "pfeilgeschwind" steht. Es verbleibt dann 100101 im Datenstrom. Die erste 1 wählt "bei" statt "über" wie im Beispiel mit einer 1 mehr. Im Datenstrom verbleibt dann noch 00101, wobei zunächst das Symbol 0010 selektiert wird, das für "rutschiger" steht. Schließlich bleibt eine einzige 1 im zu verbergenden Datenstrom übrig. Damit könnte nun entweder "Straße" (11) oder "Fahrbahn" (10) selektiert werden. Diese Wahl ist völlig frei. Es wird somit durch die Bitsequenz

0010/0011/001/0100/1/0010/1x

der Satz "Über die Anhöhe rast der PKW pfeilgeschwind bei rutschiger Straße" erzeugt, wobei x willkürlich zu 1 gesetzt wurde. Diese Bitsequenz unterscheidet sich nur von der Ausgangssequenz dadurch, daß hier das ursprüngliche 15. Bit fehlt.

In Abweichung vom beschriebenen Ausführungsbeispiel könnte statt einer kanonischen Huffman-Codierung auch eine einfache Huffman-Codierung mit Bäumen verwendet werden. Die kanonische Codierung ermöglicht jedoch eine wesentlich effizientere Decodierung durch das Nachsehen in Tabellen anhand der ersten Codewortbits und durch die Beschränkung auf nur wenige effiziente additive/subtraktive Operationen. Auch die kanonische Huffman-Codierung ist der Technik bekannt.

Im Vorangegangenen wurde darauf hingewiesen, daß kürzeren Codewörtern eine gebräuchlichere Satzstellung bzw. eine gebräuchlichere Synonymalternative zugeordnet werden kann. Dabei wird davon ausgegangen, daß kürzere Codewörter hier häufiger in einem Datenstrom von zu verbergenden Informationen auftreten, weshalb die gebräuchlicheren Alternativen bzw. Synonyme häufiger gewählt werden.

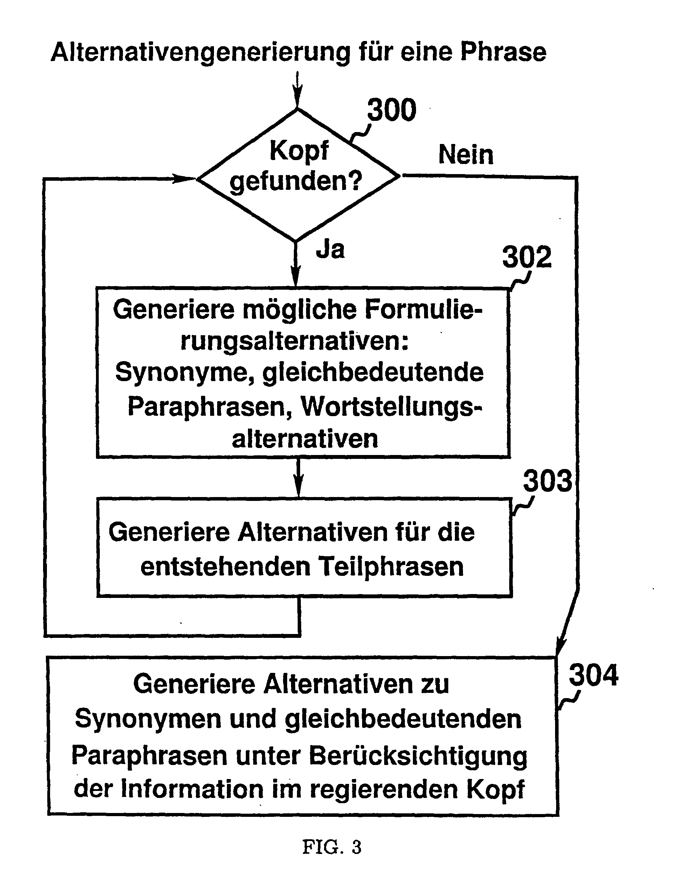

Im Nachfolgenden wird auf Fig. 3 eingegangen, in der das Verfahren, das zum Bestimmen einer Mehrzahl von Formulierungsalternativen für den Text ausgeführt wird, schematisch dargestellt ist. Beispielhaft ist hier die Erzeugung von Alternativen für eine Phrase nach dem HPSG-Gedanken dargestellt. Zunächst wird in einem Schritt 300 der Kopf eines Satzes gesucht. Dies ist in der Regel ein finites Verb, das Prädikat. In einem Lexikoneintrag in der Lexikon/Grammatik-Stufe zu diesem Verb steht dann, welche Art von Komplementen und was für ein Subjekt das Verb zuläßt. Teilweise können auch Adjunkte oder idiomatische Wendungen im Lexikoneintrag ausgewiesen sein. Sowohl syntaktische wie auch semantische Informationen können im Lexikon verzeichnet sein oder mittels (lexikalischer) Regeln hergeleitet werden. So kann z. B. für ein Wort (Subjekt, Komplement oder Adjunkt) verzeichnet sein, ob es sich um ein lebendiges Wesen, einen Menschen, ein Tier, ein Objekt, einen abstrakten Begriff, usw. handelt. Auch können hier schon Informationen über mögliche Wortstellungsalternativen abrufbar sein. Im Idealfall sind aus den lexikalischen Informationen die Wahrscheinlichkeiten für alle denkbaren Alternativen ableitbar, wie es in einem Schritt 302 angedeutet ist. Aus diesen Wahrscheinlichkeiten werden die Teilinformationen erzeugt, die jeder Formulierungsalternative, d. h. jedem Synonym und jeder Wortstellungsalternative zugeordnet sind.

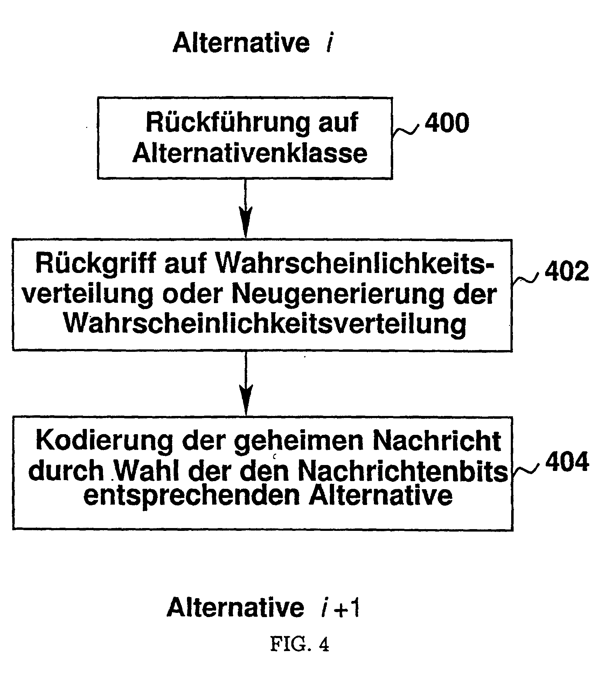

Es können also Synonyme zum Kopf der Phrase, d. h. des Textes gesucht werden, Wendungen mit gleicher Bedeutung gesucht werden oder Wortstellungsalternativen aufgestellt werden. Fig. 4, auf die später eingegangen wird, zeigt eine detailliertere Erläuterung des Schritts 302.

Die lexikalischen Informationen des Kopfes engen die Möglichkeit für die restlichen Glieder des Satzes ein. Innerhalb dieser Teilphrasen oder Textbestandteile wird wiederum nach einem Kopf gesucht, wie es in einem Schritt 303 angedeutet ist. Dies kann beispielsweise eine Präposition innerhalb einer Präpositionalphrase sein oder aber ein Verb in einem Nebensatz. Der Prozeß setzt sich rekursiv fort. Somit können Wortstellungsalternativen generiert werden, sobald die Analyse des Satzes weit genug fortgeschritten ist. Wurde im Schritt 300 kein Kopf gefunden, entweder weil keiner vorhanden ist, oder weil sich Schwierigkeiten beim sprachlichen Analysieren oder Parsen ergeben, können immerhin noch Synonyme generiert werden und feststehende Wendungen durch ähnlich-bedeutende ersetzt werden (Schritt 304).

Grundsätzlich muß beim Erzeugen einer Mehrzahl von Formulierungsalternativen berücksichtigt werden, daß alle Formulierungsalternativen für den Text grammatikalisch richtig sind und den im wesentlichen gleichen Sinn im gleichen Kontext unter Berücksichtigung einer Ähnlichkeitsschwelle haben, derart, daß der modifizierte Text nicht derart auffällig ist, daß in ihm geheime Informationen vermutet werden.

Fig. 4 zeigt die Behandlung einer einzelnen Alternative i. Jede Alternative wird zunächst auf ihre Alternativenklasse zurückgeführt (Schritt 400). Dies kann beispielsweise die Klasse der korrekten Wortstellung für diesen Satz sein oder die semantische Klasse, der ein Wort angehört. In einem Schritt 402 wird entweder auf eine existierende Wahrscheinlichkeitsverteilung, d. h. auf bereits existierende Teilinformationen, zurückgegriffen, oder es kann nach bestimmten Regeln, die auch der Vorrichtung zum Extrahieren von Informationen (Fig. 2) bekannt sind, eine Wahrscheinlichkeitsverteilung, d. h. Teilinformationen, erzeugt werden. Keine Neugenerierung ist erforderlich, wenn der vom Benutzer angegebene Ähnlichkeitsschwellwert so klein ist, daß er nicht größer ist als die minimale Distanz zwischen der jeweils aktuellen und der benachbarten semantischen Konzeptgruppe. Ist der Ähnlichkeitsschwellwert höher, so sollten alle semantischen Konzeptgruppen, deren Abstand zur Kernsemantik geringer als dieser Schwellwert ist, zu einer semantischen Gruppe zusammengefaßt werden. Ein bevorzugtes Verfahren zum Berechnen der semantischen Ähnlichkeit in Taxonomien wurde vorgestellt in Jay J. Jiang and David M. Conrath (1997), "Semantic similarity based on corpus statistics and lexical taxonomy", in Prodeedings of International Conference Research on Computational Linguistics (ROCLING X), Taiwan.

Grundsätzlich werden einfach die Gewichte aller beteiligten Elemente zu einem Gesamtgewicht aufsummiert, um daraus dann auf die Wahrscheinlichkeiten und somit auf die Teilinformationen der einzelnen Alternativen zu schließen. Dabei sollten die Gewichte, die einer entfernten semantischen Gruppe angehören, entsprechend herunterskaliert werden. Eine schnelle aber ungenaue Variante besteht darin, nach grober Abschätzung Wahrscheinlichkeits- oder Codebereiche für die Alternativen zu reservieren, die in einer semantischen Gruppe liegen.

Falls die Einrichtung 22 zum Auswählen (Fig. 1) eine arithmetische Codierung/Decodierung verwendet, kann ganz ohne Genauigkeitsverlust ein Intervall für jede semantische Gruppe reserviert werden, was sich aus der Gesamtsumme der dort vorhandenen Gewichte herabskaliert entsprechend der Entferntheit der Konzepte ergibt. Im Falle einer bitbasierten Auswahleinrichtung 22 könnte einfach ein Codebereich, z. B. alle Codes, die mit "110" anfangen, für die entfernte semantische Gruppe reserviert werden. Ein Schritt 404 zeigt die Funktion der Auswahleinrichtung 22, d. h. die Codierung der geheimen Nachricht durch Wahl der den Nachrichtenbits entsprechenden Alternative. Anschließend wird zur nächsten Alternative i+1 übergegangen.

Sollen mehrere geheime Nachrichten, d. h. mehrere zu verbergende Informationen, in den Text eingebracht werden, so wird typischerweise vor Beginn der ersten geheimen Informationen eine Präambel in den Strom eingefügt, die die Anzahl der vorhandenen geheimen Datenquellen und auch die Bitpositionen ihres Anfangs im Datenstrom codiert. Typischerweise wird jede geheime Datenquelle mit einem anderen Schlüssel verschlüsselt und mit Kontrollinformationen versehen. Bei der Decodierung wird dann der Benutzer nach dem Schlüssel/den Schlüsseln gefragt und es wird nur der geheime Teil decodiert, zu dem der Schlüssel paßt. Ob der Schlüssel paßt kann wiederum aus den Kontrollinformationen oder aus den decodierten Daten selbst geschlossen werden. Soll es sich bei dem decodierten Text, d. h. dem Text am Ausgang des Extrahierers 50, um einen sinnvollen Text handeln und ist dies nicht der Fall, so war der Schlüssel falsch.

Bei einer aufwendigeren Implementation der vorliegenden Erfindung kann der Benutzer die Generierung und die Auswahl der Alternativen spezifischer beeinflussen, indem er beispielsweise angibt, welche Wörter vermieden werden sollen, beispielsweise um besonders altertümliche Synonyme auszuschließen, ob der modifizierte Text eine minimale, eine mittlere oder eine maximale Satzlänge haben soll, ob der neue Text eine bestimmte Sprachkomplexität oder ein bestimmtes Sprachniveau, wie z. B. gehoben, einfach, umgangssprachlich, historisch usw. haben soll, welche Satzbaumodelle und Wortstellungsmodelle bevorzugt werden, ob der Text möglichst stark verändert werden soll, ob versucht werden soll, die Lesbarkeit des Textes zu erhöhen, welche Liste von Wörtern durch andere grundsätzlich ersetzt werden sollen, und wie mit vermuteten Fehlern umgegangen werden soll, beispielsweise mittels einer automatischen Korrektur, einer interaktiven Korrektur, oder ob die Fehler grundsätzlich ignoriert werden sollen. Voraussetzung dafür ist jedoch immer, wie bereits oft erwähnt wurde, daß die Grammatik korrekt wiedergegeben werden kann, d. h. daß insbesondere flektierte Verbformen angepaßt werden. Solche Optionen werden typischerweise am Beginn des Datenstroms oder in einer äußeren Codierungsebene in die zu verbergenden Informationen eincodiert. Vorteilhaft ist es, jeweils kurze komprimierte Symbole für die Codierung eines typischen Satzes von Konfigurationsdaten einzusetzen.

Das Ende des geheimen Datenstroms kann im allgemeinen Fall der Datenkompression auf mehrere Arten und Weisen codiert werden, und zwar einerseits durch eine explizite Speicherung der Bitlänge in der Präambel der zu komprimierenden Daten, oder durch Codierung einer Variante mit der Bedeutung "Ende des geheimen Datenstroms". Damit die letztere Variante möglich ist, müßte jedoch in jedem Kontext ein solches Symbol explizit codiert werden. Dies erhöht jedoch die Entropie und damit die Länge der komprimierten Daten. Im Falle des Codiergangs zum Verbergen geheimer Daten ist diese zweite Variante ohnehin nicht möglich: Eine Bitsequenz im geheimen Datenstrom könnte vorzeitig das Ende-Symbol selektieren und damit eine Fehlinformation codieren.

Bei einem bevorzugten Ausführungsbeispiel der vorliegenden Erfindung benutzt die Einrichtung 20 zum Bestimmen einer Formulierungsalternative (Fig. 1) bzw. die Einrichtung 58 zum Liefern von Teilinformationen (Fig. 2) einen Wortspeicher in Form eines Baumes, z. B. eines Tries (eine Baumdatenstruktur für Buchstaben, abgeleitet von "information re*trie*val"), oder vorzugsweise eines Graphen, bestehend aus (a) Wort-Vollformen, also flektierten Wörtern, die dann zu anderen flektierten Wörtern in Beziehung gesetzt werden oder (b) morphologisch-syntaktische Zerlegungen der Wörter, etwa nach Flektionsklassen und insbesondere eine Aufspaltung in Wörtpräfixe, Wortstämme und Wortsuffixe, wobei lediglich die Wortstämme oder Wortpräfix-Wortstamm-Kombinationen explizit als Synonyme in Beziehung gesetzt werden müssen und die jeweiligen flektierten Formen entsprechend dem aktuellen Bedarf beim jeweils vorgefundenen Wort anhand von Flektionsdaten analysiert und für ein gewähltes Synonym entsprechend generiert werden.

Synonymverweise sind dabei organisiert sind als (a) Kette von synonymen Bedeutungen eines Wortes, die erstens ringförmig aufeinander verweisen und zweitens implizit durch eine Ordnungsvorschrift wie die lexikalische Reihenfolge oder Anordnung nach Vorkommenswahrscheinlichkeit oder explizit durch eine Kennzeichnung des Ranges eines oder mehrerer Elemente geordnet sind oder als (b) Gruppe von als synonym betrachteten Wörtern oder als Verweise auf die Synonyme mit der Eigenschaft, daß umgekehrt auch von den betroffenen Synonymen auf diese Gruppe verwiesen wird oder diese Gruppe als Wert eines Synonyms gespeichert wird.

Es sei darauf hingewiesen, daß sich ein HPSG-Parser zum Einsatz beim erfindungsgemäßen Konzept besonders gut eignet, da mit ihm auch das Problem von Mehrdeutigkeiten bei Umstellung von Bestandteilen des Satzes angegangen werden kann. Dies wird anhand des folgenden Beispielsatzes dargestellt. Der Beispielsatz lautet:

"Er sieht den Mann auf dem Berg mit dem Fernglas."

Dieser Satz hat prinzipiell vier korrekte Bedeutungen, die darin bestehen, daß "er" oder "der Mann" jeweils "auf dem Berg stehen" oder "ein Fernglas haben". Dagegen hat der ähnliche Satz

"Er sieht den Stern auf dem Berg mit dem Fernglas."

nur eine korrekte Bedeutung. Aufgrund der semantischen Eigenschaften von "Stern", und insbesondere aufgrund der Größenverhältnisse zu den anderen Gegenständen, kann der HPSG-Parser aufgrund seiner inneren hierarchisch organisierten Baumstruktur ermitteln, daß ein Stern nicht auf einem Berg stehen kann und auch kein Fernglas haben kann.

Andere Verfahren zur Reduktion der Mehrdeutigkeiten, welche auch als Disambiguisierung bezeichnet werden, sind statistisch und/oder regelbasiert. Solche Verfahren können entweder statt eines HPSG-Parsers oder ergänzend zu einem HPSG-Parser eingesetzt werden. Diese Verfahren basieren auf Wörterbüchern mit Kontexten, durch die eine große Menge von potentiellen Mehrdeutigkeiten korrekt aufgelöst sind. Solche Wörterbücher werden oftmals per Hand oder aber semiautomatisch erstellt. Die Vorrichtungen und Verfahren der vorliegenden Erfindung können ohne weiteres auf solche bereits bestehenden Wörterbücher zurückgreifen. Aufgrund der vorkommenden Wörter oder aufgrund der vorkommenden grammatikalischen Strukturen werden dann vorzugsweise unter Verwendung solcher Wörterbücher statistische oder regelbasierte Gesetzmäßigkeiten automatisch ermittelt.

So ist zwar eine Sinnverfälschung durch Variieren lediglich der Reihenfolge der Textbestandteile nicht so wahrscheinlich wie bei der Verwendung von Synonymen. Erfindungsgemäß wird jedoch auch hier im Sinne des Grundgedankens der Steganographie darauf geachtet, daß neben der grammatikalischen Richtigkeit keine bzw. keine allzugroßen Sinnveränderungen durch das Verbergen der Informationen auftritt. Daher wird grundsätzlich auf Formulierungsalternativen abgestellt, die einen identischen Sinn haben. Falls dies im konkreten Fall nicht möglich ist oder falls die Anzahl der dann möglichen Formulierungsalternativen zu gering ist, wird immer versucht, eine in einem gewissen Rahmen befindliche kleine Abweichung in den Bedeutungsgehalten der Formulierungsalternativen sicherzustellen. Ist auch dies für einen bestimmten Satz nicht möglich, so werden in diesem Satz keine Informationen verborgen, sondern er wird übergangen.

**Patentansprüche**

1. Vorrichtung (10) zum Verbergen von Informationen in einem Text, der zumindest einen Satz aufweist, mit folgenden Merkmalen:

einer Einrichtung (12) zum Liefern des Textes;

einer Einrichtung (18) zum sprachlichen Analysieren des Textes, um Textbestandteile zu liefern, wobei die Textbestandteile Bestandteile des Satzes sind, und wobei der Satz neben zumindest einem weiteren Bestandteil als Bestandteil genau ein Prädikat aufweist;

einer Einrichtung (20) zum Bestimmen einer Mehrzahl von Formulierungsalternativen für den Text

- durch Variieren der Reihenfolge der Textbestandteile selbst,

- durch Ermitteln von Synonymen für die Textbestandteile und Variieren der Reihenfolge der Synonyme für die Textbestandteile, oder

- durch Ermitteln von Synonymen für zumindest einen Textbestandteil und Variieren der Reihenfolge eines Synonyms für den zumindest einen Textbestandteil und eines anderen Textbestandteils des Satzes,

wobei jede Formulierungsalternative für den Text grammatikalisch richtig ist und den im wesentlichen gleichen Sinn wie der Text hat, wobei jeder Reihenfolge und jedem ermittelten Synonym bestimmte Teilinformationen zugeordnet sind;
einer Einrichtung (22) zum Auswählen einer Formulierungsalternative aus der Mehrzahl von Formulierungsalternativen, derart, daß die Teilinformationen, die der ausgewählten Formulierungsalternative zugeordnet sind, zumindest einem Teil der zu verbergenden Informationen entsprechen; und
einer Einrichtung (24) zum Ausgeben der Formulierungsalternative, die einen modifizierten Text bildet, wobei in dem modifizierten Text die zu verbergenden Informationen verborgen sind.

2. Vorrichtung (10) nach Anspruch 1, bei der die Einrichtung (18) zum sprachlichen Analysieren ein Parser, insbesondere ein hochlexikalisierter unifikationsbasierter Parser und speziell ein HPSG-Parser ist.

3. Vorrichtung (10) nach Anspruch 1 oder 2, bei der die Einrichtung (20) zum Bestimmen einer Mehrzahl von Formulierungsalternativen eine Lexikon/Grammatik-Stufe aufweist, derart, daß grammatikalisch richtige Formulierungsalternativen geliefert werden.

4. Vorrichtung nach Anspruch 3, bei der in der Lexikon/Grammatik-Stufe Synonyme für Textbestandteile sowie für jedes Synonym eindeutige Teilinformationen gespeichert sind wie syntaktische, semantische, kontextuelle und statistische Informationen.

5. Vorrichtung (10) nach einem der vorhergehenden Ansprüche,
bei der jeder Reihenfolge der Textbestandteile und jedem ermittelten Synonym als Teilinformationen eine Gewichtung zugeordnet ist, wobei die Gewichtung derart bestimmt ist, daß alle Gewichtungen für die Reihenfolge bzw. die Synonyme zusammen eine Wahrscheinlichkeit von 1 ergeben, und
bei der die Einrichtung (22) zum Auswählen angeordnet ist, um gemäß den Regeln der arithmetischen Decodierung jeweils eine Formulierungsalternative zu wählen, gesteuert durch die als codierte Daten aufgefaßten geheimen Daten.

6. Vorrichtung (10) nach einem der Ansprüche 1 bis 4, bei der die Teilinformationen Huffman-Codewörter sind, wobei folgende Gleichung gilt:

$$\sum_{i=1}^{n} 2^{-l_i} = 1,0$$

wobei $l_i$ die Länge in Bit des i-ten Huffman-Codeworts ist, und wobei n die Anzahl von Huffman-Codewörtern eines Kontextes ist, wobei alle Synonyme für einen Textbestandteil einschließlich des Textbestandteils zusammen einen eigenen Kontext bilden, wobei alle verschiedenen Reihenfolgen von Textbestandteilen einschließlich der Reihenfolge der Textbestandteile im Text einen eigenen Kontext bilden, derart, daß alle beliebigen zu verbergenden Informationen einen Strom von gültigen Huffman-Codewörtern darstellen.

7. Vorrichtung (10) nach Anspruch 5, bei der die zu verbergenden Informationen eine Bitsequenz aufweisen, wobei die Einrichtung (22) zum Auswählen angeordnet ist, um von dem Anfang der Bitsequenz so viele Bits zu nehmen, bis die Zahl, die diese Bits darstellen, eindeutig in einem speziellen der Wahrscheinlichkeitsintervalle liegt, die durch die Gewichtungen bestimmt sind, woraufhin die Einrichtung (22) zum Auswählen die Formulierungsalternative auswählt, die der dem speziellen Wahrscheinlichkeitsintervall zugeordneten Gewichtung entspricht, woraufhin die Einrichtung (22) zum Auswählen eine weitere Intervallschachtelung vornimmt, um die nächste Formulierungsalternative zu wählen.

8. Vorrichtung (10) nach Anspruch 6, bei der die Einrichtung zum Auswählen (22) angeordnet ist, um eine Huffman-Decodierung durchzuführen, wobei dieselbe nacheinander auf verschiedene Huffman-Code-Kontexte zugreift, die durch die Textbestandteile aus einer Anzahl von durch die Einrichtung (20) zum Bestimmen einer Mehrzahl von Formulierungsalternativen bereitgestellten Formulierungsalternativen selektiert werden, wobei die Eingabe in die Huffman-Decodierung die zu verbergenden Informationen sind, und wobei die Ausgabe aus der Huffman-Decodierung der modifizierte Text ist.

9. Vorrichtung nach einem der Ansprüche 3 bis 8, bei der jeder Textbestandteil zumindest ein Wort aufweist, und wobei die Synonyme für jedes Wort in der Lexikon/Grammatik-Stufe zusammen mit den entsprechenden Teilinformationen gespeichert sind, während die Teilinformationen für jede unterschiedliche Reihenfolge der Textbestandteile nach einer Modellierung realer linguistischer Gesetze durch deklarative Regeln, Constraints oder feste Implementationen in Software vorgegeben sind.

10. Vorrichtung (10) nach Anspruch 9, bei der die Einrichtung (22) zum Auswählen angeordnet ist, um einen ersten Abschnitt der zu verbergenden Informationen für die Auswahl der Reihenfolge der Textbestandteile zu verwenden und die nachfolgenden Abschnitte für die Auswahl der Synonyme zu verwenden und wobei die Reihenfolge der ausgewählten Synonyme eine unter einer oder mehreren linguistisch möglichen Reihenfolgen selektierte ist und von der Reihenfolge der Textbestandteile im Text unabhängig ist.

11. Vorrichtung (10) nach einem der vorhergehenden Ansprüche, die ferner folgendes Merkmal aufweist:

   eine Einrichtung zum Verschlüsseln und/oder Komprimieren der zu verbergenden Informationen, wodurch verschlüsselte und/oder komprimierte zu verbergende Informationen erzeugt werden, die in die Einrichtung (22) zum Auswählen einspeisbar sind.

12. Vorrichtung nach einem der vorhergehenden Ansprüche, bei der die Einrichtung (18) zum sprachlichen Analysieren angeordnet ist, keine Textbestandteile zu liefern, für die die Korrektheit der Umformulierung nicht garantiert werden kann, und/oder bei der die Einrichtung (20) zum Bestimmen von Formulierungsalternativen angeordnet ist, um nur solche Formulierungsalternativen anzubieten, für die sichergestellt ist, daß bei deren Analyse wieder der gleiche Satz von Formulierungsalternativen erhalten werden kann.

13. Vorrichtung nach einem der vorhergehenden Ansprüche, bei der es einen öffentlichen Text und geheime Daten gibt, wobei die Vorrichtung (10) eine Steuereinrichtung aufweist, die derart angeordnet ist, um die Informationen der geheimen Daten der Einrichtung (22) zum Auswählen zuzuführen, derart, daß dieselben durch Modifizieren des öffentlichen Textes in demselben verborgen werden.

14. Vorrichtung nach Anspruch 13, bei der die zu einer Kompression und/oder Verschlüsselung verwendeten Statistiken vom öffentlichen Text abhängig sind, so daß Übereinstimmungen von Datenfragmenten im öffentlichen Text und den geheimen Daten zur effizienten Kompression genutzt werden.

15. Vorrichtung (10) nach einem der vorhergehenden Ansprüche, bei der die Einrichtung (20) zum Bestimmen der Formulierungsalternativen über die Teilinformationen steuerbar ist, um einen bestimmten Stil einzuhalten, insbesondere um bestimmte Formulierungsalternativen zu bevorzugen bzw. auszuschließen, wie z. B. bestimmte Wörter, bestimmte Satzlängen, welche Sprachkomplexität, welches Sprachniveau, welche Satzbau- und Wortstellungsmodelle, welche Erzählperspektive, welchen ethnischen Schwerpunkt bzgl. der Herkunft der Wörter der modifizierte Text haben soll, welche Liste von zu vermeidenden Wörtern verwendet werden soll, wie mit vermuteten Fehlern im Text umzugehen ist und ob neue Fehler eingebaut werden dürfen.

16. Vorrichtung nach einem der vorhergehenden Ansprüche, bei der eine Ähnlichkeitsschwelle vorgebbar ist, derart, daß die Einrichtung (20) zum Bestimmen von Formulierungsalternativen ähnliche Formulierungsvarianten für den Text bestimmt, deren semantische Unterschiede zur Ausgangsalternative unter der Ähnlichkeitsschwelle liegen, während Formulierungsalternativen, deren semantische Unterschiede zur Ausgangsalternative über der Ähnlichkeitsschwelle liegen, verworfen werden.

17. Vorrichtung nach Anspruch 15, bei der die Textmenge begrenzt ist, wobei die Ähnlichkeitsschwelle derart bemessen ist, daß gerade alle zu verbergenden Informationen in der begrenzten Textmenge untergebracht werden können.

18. Vorrichtung (10) nach einem der vorhergehenden Ansprüche, bei der die Einrichtung (20) zum Bestimmen einer Mehrzahl von Formulierungsalternativen angeordnet ist, um dynamisch die Formulierungsalternativen zu bestimmen, und um dynamisch die Teilinformationen zu erzeugen, die jeder Formulierungsalternative zugeordnet sind.

**19.** Vorrichtung (10) nach einem der vorhergehenden Ansprüche, bei der die Einrichtung (20) zum Bestimmen einer Mehrzahl von Formulierungsalternativen angeordnet ist, um nur die Formulierungsalternative aus der Mehrzahl von Formulierungsalternativen auszugeben, die durch die Einrichtung (22) zum Auswählen aufgrund der zu verbergenden Informationen ausgewählt wird.

**20.** Vorrichtung (50) zum Extrahieren von in einem modifizierten Text verborgenen Informationen, wobei der modifizierte Text zumindest einen Satz aufweist, mit folgenden Merkmalen:

einer Einrichtung (52) zum Liefern des modifizierten Textes;

einer Einrichtung (56) zum sprachlichen Analysieren des modifizierten Textes, um Textbestandteile des modifizierten Textes zu liefern, wobei die Textbestandteile Bestandteile des Satzes sind, und wobei der Satz neben zumindest einem weiteren Bestandteil als Bestandteil genau ein Prädikat aufweist;

einer Einrichtung (58) zum Liefern von Teilinformationen, die der Reihenfolge der Textbestandteile und, falls der modifizierte Text in sprachlichen Bedeutungen der Textbestandteile verborgene Informationen hat, den sprachlichen Bedeutungen der Textbestandteile zugeordnet sind, wobei die Einrichtung zum Liefern von Teilinformationen die gleichen Teilinformationen liefert, die bei dem Verbergen der Informationen, um den modifizierten Text zu erzeugen, der Reihenfolge der Textbestandteile und gegebenenfalls den sprachlichen Bedeutungen der Textbestandteile zugeordnet waren;

einer Einrichtung (60) zum Kombinieren der Teilinformationen, die für den modifizierten Text durch die Einrichtung zum Liefern (58) von Teilinformationen geliefert wurden, um die in dem modifizierten Text verborgenen Informationen zu erhalten; und

einer Einrichtung (62) zum Ausgeben der verborgenen Informationen.

**21.** Vorrichtung (50) nach Anspruch 20, bei der die Teilinformationen Gewichtungen sind, wobei die Einrichtung (60) zum Kombinieren der Teilinformationen eine arithmetische Codierung ausführt, um die verborgenen Informationen zu extrahieren.

**22.** Vorrichtung (50) nach Anspruch 20, bei der die Teilinformationen einfache oder kanonische und insbesondere präfix-freie Huffman-Codewörter sind, wobei die Einrichtung (60) zum Kombinieren der Teilinformationen eine Huffman-Codierung ausführt, wobei die Code-Kontexte, die zur Huffman-Codierung verwendet werden, durch die Einrichtung (58) zum Liefern selektiert werden und den Code-Kontexten entsprechen, die während des Verbergens von Informationen eingesetzt wurden.

**23.** Vorrichtung (50) nach einem der Ansprüche 20 bis 22, bei der die Teilinformationen, die beim Verbergen verwendet wurden, zunächst die Reihenfolge der Textbestandteile und daran anschließend die Synonyme der Textbestandteile in einer vorbestimmten Reihenfolge betreffen, wobei die Einrichtung (60) zum Kombinieren der Teilinformationen angeordnet ist, um aus der Reihenfolge der Textbestandteile des modifizierten Textes zunächst die Teilinformationen, die sich auf die Reihenfolge beziehen, abzuleiten und dann ausgehend von einer vorgegebenen Reihenfolge der Textbestandteile nacheinander die Teilinformationen, die den einzelnen Textbestandteilen zugeordnet sind, abzuleiten.

**24.** Vorrichtung (50) nach einem der Ansprüche 20 bis 23, bei der die Einrichtung (58) zum Liefern von Teilinformationen ferner folgendes Merkmal aufweist:

eine Einrichtung zum Bestimmen einer Mehrzahl von Formulierungsalternativen für den modifizierten Text durch Variieren der Reihenfolge der Textbestandteile und/oder durch Verwenden von Synonymen oder Paraphrasen für die Textbestandteile, wobei jede Formulierungsalternative für den Text grammatikalisch richtig ist und den im wesentlichen gleichen Sinn wie der Text hat, wobei jeder Reihenfolge und/oder jedem Synonym oder jeder Paraphrase bestimmte Teilinformationen zugeordnet sind,

wobei die Einrichtung (58) zum Liefern von Teilinformationen angeordnet ist, um auf die Einrichtung zum Bestimmen einer Mehrzahl von Formulierungsalternativen zuzugreifen, um die Teilinformationen, die sich auf die Reihenfolge und/oder die sprachliche Bedeutung der Textbestandteile des modifizierten Textes beziehen, wiederzugewinnen.

**25.** Verfahren zum Verbergen von Informationen in einem Text, der zumindest einen Satz aufweist, mit folgenden Schritten:

Liefern des Textes;

sprachliches Analysieren des Textes, um Textbestandteile zu liefern, wobei die Textbestandteile Bestandteile des Satzes sind, und wobei der Satz neben zumindest einem weiteren Bestandteil als Bestandteil genau ein Prädikat aufweist;

Bestimmen einer Mehrzahl von Formulierungsalternativen für den Text

- durch Variieren der Reihenfolge der Textbestandteile selbst,

- durch Ermitteln von Synonymen für die Textbestandteile und Variieren der Reihenfolge der Synonyme für die Textbestandteile, oder

- durch Ermitteln von Synonymen für zumindest einen Textbestandteil und Variieren der Reihenfolge eines Synonyms für den zumindest einen Textbestandteil und eines anderen Textbestandteils des Satzes,

wobei jede Formulierungsalternative für den Text grammatikalisch richtig ist und den im wesentlichen gleichen Sinn wie der Text hat, wobei jeder Reihenfolge und jedem ermittelten Synonym bestimmte Teilinformationen zugeordnet sind;
Auswählen einer Formulierungsalternative aus der Mehrzahl von Formulierungsalternativen, derart, daß die Teilinformationen, die der ausgewählten Formulierungsalternative zugeordnet sind, den zu verbergenden Informationen entsprechen; und
Ausgeben der Formulierungsalternativen, die einen modifizierten Text bilden, wobei in dem modifizierten Text die zu verbergenden Informationen enthalten sind.

26. Verfahren zum Extrahieren von in einem modifizierten Text verborgenen Informationen, wobei der modifizierte Text zumindest einen Satz aufweist, mit folgenden Schritten:

Liefern des modifizierten Textes;

sprachliches Analysieren des modifizierten Textes, um Textbestandteile des modifizierten Textes zu liefern, wobei die Textbestandteile Bestandteile des Satzes sind, und wobei der Satz neben zumindest einem weiteren Bestandteil als Bestandteil genau ein Prädikat aufweist;

Liefern von Teilinformationen, die der Reihenfolge der Textbestandteile und den sprachlichen Bedeutungen der Textbestandteile zugeordnet sind, wobei die gleichen Teilinformationen geliefert werden, die bei dem Verbergen der Informationen, um den modifizierten Text zu erzeugen, der Reihenfolge der Textbestandteile und, falls der modifizierte Text in sprachlichen Bedeutungen der Textbestandteile verborgene Informationen hat, den sprachlichen Bedeutungen der Textbestandteile zugeordnet waren;

Kombinieren der Teilinformationen, die für den modifizierten Text durch den Schritt des Lieferns von Teilinformationen geliefert wurden, um die in dem modifizierten Text verborgenen Informationen zu erhalten; und

Ausgeben der verborgenen Informationen.

27. Vorrichtung nach Anspruch 1 oder 20, bei der die Einrichtung (20) zum Bestimmen von Formulierungsalternativen bzw. die Einrichtung (58) zum Liefern von Teilinformationen angeordnet ist, um einen Wortspeicher in Form eines Baumes oder eines Graphen zu benutzen, der besteht aus (a) Wort-Vollformen, also flektierten Wörtern, die dann zu anderen flektierten Wörtern in Beziehung gesetzt sind oder (b) morphologisch-syntaktische Zerlegungen der Wörter nach Flektionsklassen und insbesondere eine Aufspaltung in Wörtpräfixe, Wortstämme und Wortsuffixe, wobei lediglich die Wortstämme oder Wortpräfix-Wortstamm-Kombinationen explizit als Synonyme in Beziehung gesetzt sind und die jeweiligen flektierten Formen entsprechend dem aktuellen Bedarf beim jeweils vorgefundenen Wort anhand von Flektionsdaten analysiert und für ein gewähltes Synonym entsprechend generiert werden.

28. Vorrichtung nach Anspruch 27, **dadurch gekennzeichnet, daß** Synonymverweise entweder organisiert sind als (a) Kette von synonymen Bedeutungen eines Wortes, die erstens ringförmig aufeinander verweisen und zweitens implizit durch eine Ordnungsvorschrift wie die lexikalische Reihenfolge oder Anordnung nach Vorkommenswahrscheinlichkeit oder explizit durch eine Kennzeichnung des Ranges eines oder mehrerer Elemente geordnet sind, oder als (b) Gruppe von als synonym betrachteten Wörtern oder als Verweise auf die Synonyme mit der Eigenschaft, daß umgekehrt auch von den betroffenen Synonymen auf diese Gruppe verwiesen wird oder diese Gruppe als Wert eines Synonyms gespeichert wird.

## Claims

1. A device (10) for hiding information in a text having at least one sentence, comprising
means (12) for providing the text;
means (18) for linguistically analyzing the text to produce text components, the text components being components of the sentence and the sentence, in addition to at least one additional component, having exactly one predicate as component; means (20) for determining a plurality of formulation alternatives for the text

- by varying the order of the text components itself,

- by ascertaining synonyms for the text components and varying the order of the synonyms for the text components, or

- by ascertaining synonyms for at least one text component and varying the order of a synonym for the at least one text component and of another text component of the sentence,

with every formulation alternative being grammatically correct for the text and having essentially the same meaning as the text, with every sequence and every synonym ascertained having specific partial information allocated thereto; means (22) for selecting a formulation alternative from the plurality of formulation alternatives in such a manner that the partial information that is allocated to the selected formulation alternative corresponds at least to part of the information to be hidden; and means (24) for outputting the formulation alternative that forms a modified text, with said information to be hidden being hidden in said modified text.

2. A device (10) according to claim 1, wherein the means (18) for linguistically analyzing is a parser, in particular a highly lexicalized, unification-based parser and specifically an HPSG parser.

3. A device (10) according to claim 1 or 2, wherein the means (20) for determining a plurality of formulation alternatives comprises a dictionary/grammar stage such that grammatically correct formulation alternatives are provided.

4. A device according to claim 3, wherein the dictionary/grammar stage has stored therein synonyms for text components as well unequivocal partial information for each synonym, such as syntactic, semantic, contextual and statistic information.

5. A device (10) according to any of the preceding claims, wherein each sequence of the text components and each synonym ascertained has a weighting allocated thereto as partial information, said weighting being determined such that all weightings for the sequence and the synonyms together, respectively, yield a probability of 1, and wherein the means (22) for selecting is arranged to select one formulation alternative each in accordance with the rules of arithmetic decoding, controlled by the secret data that are understood as coded data.

6. A device (10) according to any of claims 1 to 4, wherein the partial information is in the form of Huffman code words, wherein the following equation holds:

$$\sum_{i=1}^{n} 2^{-li} = 1.0$$

in which li is the length in bit of the $i^{th}$ Huffman code word and n is the number of Huffman code words of a context, wherein all synonyms for a text component, inclusive of the text component, together constitute a context of their own, wherein all different sequences of text components, inclusive of the sequence of the text components in the text, constitute a context of their own, such that any arbitrary information to be hidden constitutes a stream of valid Huffman code words.

7. A device (10) according to claim 5, wherein the information to be hidden comprises a bit sequence, wherein the means (22) for selecting is arranged to take as many bits from the beginning of the bit sequence until the number constituted by these bits is unequivocally within a specific one of the probability intervals determined by said weightings, whereupon said means (22) for selecting selects that formulation alternative that corresponds to the weighting allocated to the specific probability interval, whereupon said means (22) for selecting carries out additional interval interleaving in order to select the next formulation alternative.

8. A device (10) according to claim 6, wherein the means (22) for selecting is arranged to perform Huffman decoding, said means successively accessing various Huffman code contexts selected by the text components from a number of formulation alternatives provided by said means (20) for determining a plurality of formulation alternatives, with the input to Huffman decoding being the information to be hidden and with the output from Huffman decoding being the modified text.

9. A device according to any of claims 3 to 8, wherein each text component comprises at least one word, and wherein the synonyms for each word are stored in the dictionary/grammar stage together with the corresponding partial information, whereas the partial information for each different sequence of text components is predetermined in accordance with modelling of real linguistic laws by declarative rules, constraints or fixed implementations in software.

10. A device (10) according to claim 9, wherein the means (22) for selecting is arranged to utilize a first section of the information to be hidden for the selection of the sequence of the text components and the subsequent sections for the selection of the synonyms, and wherein the sequence of the selected synonyms is a sequence selected from one or several linguistically possible sequences and is independent of the sequence of the text components in the text.

11. A device (10) according to any of the preceding claims, further comprising:

means for encrypting and/or compressing the information to be hidden, whereby encrypted and/or compressed information to be hidden is produced which is adapted to be fed to said means (22) for selecting.

12. A device according to any of the preceding claims, wherein the means (18) for linguistically analyzing is arranged to deliver no text components for which the correctness of the reformulation cannot be guaranteed and/or wherein the means (20) for determining formulation alternatives is arranged to offer only such formulation alternatives for which it is ensured that the analysis thereof can yield again the same sentence of formulation alternatives.

13. A device according to any of the preceding claims, wherein there is public text and secret data, the device (10) comprising a control means arranged to supply the information of the secret data to said means (22) for selecting, such that the same are hidden in the public text by modification of the public text.

14. A device according to claim 13, wherein the statistics used for compression and/or encryption are dependent on the public text so that conformities of data fragments in the public text and the secret data are utilized for efficient compression.

15. A device (10) according to any of the preceding claims, wherein the means (20) for determining the formulation alternatives is controllable via the partial information in order to maintain a specific style, in particular to prefer or exclude certain formulation alternatives, such as e.g. certain words, specific lengths of sentences, the kind of language complexity, the language level, the kind of syntax and word position models, the perspective of narration, the ethnic focus with respect to the origin of the words the modified text is supposed to have, which list of words to be avoided should be used, how presumed errors in the text are to be handled and whether new errors may be built in.

16. A device according to any of the preceding claims, wherein a similarity threshold can be predetermined such that the means (20) for determining formulation alternatives determines similar formulation variants for the text the semantic differences of which with respect to the original alternative are below the similarity threshold, whereas formulation alternatives the semantic differences of which with respect to the original alternative are above the similarity threshold are rejected.

17. A device according to claim 15, wherein the amount of text is limited, with the similarity threshold being dimensioned such that just the entire information to be hidden can be accommodated in the limited amount of text.

18. A device (10) according to any of the preceding claims, wherein the means (20) for determining a plurality of formulation alternatives is arranged to dynamically determine the formulation alternatives and to dynamically produce the partial information allocated to each formulation alternative.

19. A device (10) according to any of the preceding claims, wherein the means (20) for determining a plurality of formulation alternatives is arranged to output only that formulation alternative from the plurality of formulation alternatives that is selected by the means (22) for selecting on the basis of the information to be hidden.

20. A device (50) for extracting information hidden in a modified text, the modified text having at least one sentence, comprising:

means (52) for providing the modified text;

means (56) for linguistically analyzing the modified text to produce text components of the modified text, the text components being components of the sentence and the sentence, in addition to at least one additional component, having exactly one predicate as component;

means (58) for producing partial information allocated to the sequence of the text components and, in case the modified text has information hidden in linguistic meanings of the text components, to the linguistic meanings of the text components, said means for producing partial information producing the same partial information which, in hiding the information to produce the modified text, was allocated to the sequence of text components and optionally to the linguistic meanings of the text components;

means (60) for combining the partial information that was produced for the modified text by said means (58) for producing partial information, in order to obtain the information hidden in the modified text; and

means (62) for outputting the hidden information.

21. A device (50) according to claim 20, wherein the partial information is in the form of weightings, with said means (60) for combining the partial information carrying out arithmetic coding for extracting the hidden information.

22. A device (50) according to claim 20, wherein said partial information is in the form of simple or canonical, in particular prefix-free, Huffman code words, wherein said means (60) for combining the partial information carries out Huffman coding, in which the code contexts used for Huffman coding are selected by said means (58) for producing and correspond to the code contexts that were utilized in hiding information.

23. A device (50) according to any of claims 20 to 22, wherein the partial information that was used in hiding first relates to the sequence of the text components and thereafter to the synonyms of the text components in a predetermined sequence, and wherein said means (60) for combining the partial information is arranged to derive from the sequence of the text components of the modified text firstly the partial information relating to the sequence and then, on the basis of a predetermined sequence of the text components, to successively derive the partial information allocated to the individual text components.

24. A device (50) according to any of claims 20 to 23, wherein said means (58) for producing partial information further comprises:

means for determining a plurality of formulation alternatives for the modified text by varying the sequence of the text components and/or by using synonyms or paraphrases for the text components, each formulation alternative being grammatically correct for the text and having substantially the same meaning as the text, with each sequence and/or each synonym or each paraphrase having specific partial information allocated thereto,

wherein said means (58) for producing partial information is arranged to access said means for determining a plurality of formulation alternatives, in order to retrieve the partial information relating to the sequence and/or the linguistic meaning of the text components of the modified text.

25. A method for hiding information in a text having at least one sentence, comprising the following steps:

providing the text;

linguistically analyzing the text to produce text components, the text components being components of the sentence and the sentence, in addition to at least one additional component, having exactly one predicate as component;

determining a plurality of formulation alternatives for the text

- by varying the order of the text components itself,

- by ascertaining synonyms for the text components and varying the order of the synonyms for the text components, or

- by ascertaining synonyms for at least one text component and varying the order of a synonym for the at least one text component and of another text component of the sentence,

with every formulation alternative being grammatically correct for the text and having essentially the same meaning as the text, with every sequence and every synonym ascertained having specific partial information allocated thereto;

selecting a formulation alternative from the plurality of formulation alternatives in such a manner that the partial information that is allocated to the selected formulation alternative corresponds to the information to be hidden; and

outputting the formulation alternatives that form a modified text, with said information to be hidden being contained in said modified text.

26. A method for extracting information hidden in a modified text, the modified text having at least one sentence, comprising the following steps:

providing the modified text;

linguistically analyzing the modified text to produce text components of the modified text, the text components being components of the sentence and the sentence, in addition to at least one additional component, having exactly one predicate as component;

producing partial information allocated to the sequence of the text components and to the linguistic meanings of the text components, with the same partial information being produced which, in hiding the information to produce the modified text, was allocated to the sequence of text components and, in case the modified text has information hidden in linguistic meanings of the text components, was allocated to the linguistic meanings of the text components;

combining the partial information that was produced for the modified text by said step of producing partial information, in order to obtain the information hidden in the modified text; and

outputting the hidden information.

27. A device according to claim 1 or 20, wherein said means (20) for determining formulation alternatives or said means (58) for producing partial information is arranged to utilize a word memory in the form of a tree or graph consisting of (a) full word forms, i.e. inflected words which then are correlated to other inflected words or (b) morphologic syntactic breaking down of the words in accordance with inflection classes, and in particular splitting into word prefixes, radices and suffixes, in which only the word radices or word prefix/word radix combinations are explicitly correlated as synonyms and the respective inflected forms are analyzed in accordance with the current demand in the respective word present on the basis of inflection data, and are generated correspondingly for a selected synonym.

28. A device according to claim 27, **characterized in that** references to synonyms are organized either as (a) chain of synonymous meanings of a word that firstly make reference to each other in ring-like manner and secondly are ordered implicitly by an order regulation, such as the lexical sequence or arrangement in accordance with the probability of occurrence, or explicitly by a characterization of the rank of one or more elements, or (b) as group of words considered to be synonymous or as references to the synonyms with the property that reference is made inversely to this group as well from the synonyms concerned or that this group is stored as value of a synonym.

**Revendications**

1. Dispositif (10) pour cacher des informations dans un texte présentant au moins une phrase, aux caractéristiques suivantes :

un dispositif (12) destiné à fournir le texte ;
un dispositif (18) destiné à analyser grammaticalement le texte, pour fournir des éléments de texte, les éléments de texte étant des éléments de la phrase et la phrase comprenant, outre au moins un autre élément, précisément un verbe comme élément ;
un dispositif (20) destiné à déterminer une pluralité d'alternatives de formulation du texte

- en variant l'ordre des éléments de texte eux-mêmes,
- en déterminant des synonymes pour les éléments de texte et en variant l'ordre des synonymes pour les éléments de texte, ou
- en déterminant des synonymes pour au moins un élément de texte et en variant l'ordre d'un synonyme pour l'au moins un élément de texte et un autre élément de texte de la phrase,

chaque alternative de formulation du texte étant grammaticalement correcte et ayant sensiblement le même sens que le texte, à chaque ordre et à chaque synonyme déterminé étant associées des informations partielles déterminées ;
un dispositif (22) destiné à sélectionner une alternative de formulation parmi une pluralité d'alternatives de formulation, de sorte que les informations partielles associées à l'alternative de formulation choisie correspondent au moins à une partie des informations à cacher ; et
un dispositif (24) destiné à sortir l'alternative de formulation constituant un texte modifié, dans le texte modifié étant cachées les informations à cacher.

2. Dispositif (10) selon la revendication 1, dans lequel le dispositif (18) destiné à analyser grammaticalement est un analyseur syntaxique, en particulier un analyseur syntaxique à base d'unification, à dictionnaire riche, et spécialement un analyseur syntaxique HPSG.

3. Dispositif (10) selon la revendication 1 ou 2, dans lequel le dispositif (20) destiné à déterminer une pluralité d'alternatives de formulation présente un étage de dictionnaire/grammaire, de sorte que soient fournies des alternatives de formulation grammaticalement correctes.

**4.** Dispositif selon la revendication 3, dans lequel sont mémorisés, à l'étage de dictionnaire/grammaire, des synonymes pour les éléments de texte ainsi que, pour chaque synonyme, des informations partielles univoques, telles que des informations syntaxiques, sémantiques, contextuelles et statistiques.

**5.** Dispositif (10) selon l'une des revendications précédentes,

dans lequel à chaque ordre des éléments de texte et à chaque synonyme déterminé est associée, comme informations partielles, une pondération, la pondération étant déterminée de telle sorte que toutes les pondérations pour l'ordre ou les synonymes donnent, ensemble, une probabilité de 1, et

dans lequel le dispositif (22) destiné à sélectionner est disposé de manière à choisir chaque fois, selon les règles du décodage arithmétique, une alternative de formulation de manière commandée par les données secrètes conçues comme données codées.

**6.** Dispositif (10) selon l'une des revendications 1 à 4, dans lequel les informations partielles sont des mots de code de Huffman, où est valable l'équation suivante :

$$\sum_{i=1}^{n} 2^{-l_i} = 1,0$$

$l_i$ étant la longueur en bits du i-ième mot de code de Huffman et n étant le nombre de mots de code de Huffinan d'un contexte, tous les synonymes pour un élément de texte, y compris l'élément de texte, formant, ensemble, un contexte propre, tous les différents ordres des éléments de texte, y compris l'ordre des éléments de texte dans le texte, formant un contexte propre, de sorte que toutes les informations à cacher au choix représentent un flux de mots de code de Huffman valables.

**7.** Procédé (10) selon la revendication 5, dans lequel les informations à cacher présentent une séquence de bits, le dispositif (22) destiné à sélectionner étant disposé de manière à prélever du début de la séquence de bits un nombre de bits tel que le nombre représenté par ces bits se situe univoquement dans l'un particulier des intervalles de probabilité déterminés par les pondérations, après quoi le dispositif (22) destiné à sélectionner choisit l'alternative de formulation correspondant à la pondération associée à l'intervalle de probabilité particulier, après quoi le dispositif (22) destiné à sélectionner procède à un autre emboîtement d'intervalles, pour choisir l'alternative de formulation suivante.

**8.** Procédé (10) selon la revendication 6, dans lequel le dispositif (22) destiné à sélectionner est disposé de manière à effectuer un décodage de Huffman, celui-ci accédant successivement à différents contextes de code de Huffman sélectionnés par les éléments de texte parmi un nombre d'alternatives de formulation préparées par le dispositif (20) destiné à déterminer une pluralité d'alternatives de formulation, l'entrée dans le décodage de Huffman étant les informations à cacher et la sortie du décodage de Huffman étant le texte modifié.

**9.** Dispositif selon l'une des revendications 3 à 8, dans lequel chaque élément de texte présente au moins un mot et les synonymes pour chaque mot sont mémorisés dans l'étage de dictionnaire/grammaire, ensemble avec les informations partielles correspondantes, tandis que les informations partielles pour chaque ordre des éléments de texte différent sont données dans le logiciel selon un modelage de lois linguistiques réelles par des règles, des contraintes ou des mises en oeuvre fixes.

**10.** Procédé (10) selon la revendication 9, dans lequel le dispositif (22) destiné à sélectionner est disposé de manière à utiliser un premier segment des informations à cacher pour la sélection de l'ordre des éléments de texte et à utiliser le segment suivant pour la sélection des synonymes, l'ordre des synonymes choisis en étant un sélectionné parmi un ou plusieurs ordres linguistiquement possibles et fonction de l'ordre des éléments de texte dans le texte.

**11.** Dispositif selon l'une des revendications précédentes, présentant, par ailleurs, la caractéristique suivante :

un dispositif destiné à encrypter et/ou à comprimer les informations à cacher, par lequel sont générées des informations à cacher encryptées et/ou comprimées pouvant être alimentées vers le dispositif (22) destiné à sélectionner.

**12.** Dispositif selon l'une des revendications précédentes, dans lequel le dispositif (18) destiné à analyser grammaticalement est disposé de manière à ne pas fournir d'éléments de texte pour lesquels la correction de la reformulation ne peut pas être garantie, et/ou dans lequel le dispositif (20) destiné à déterminer des alternatives de formulation est disposé de manière à ne présenter que les alternatives de formulation pour lesquelles il est garanti qu'il pourra, lors de leur analyse, être à nouveau obtenu le même jeu d'alternatives de formulation.

13. Dispositif selon l'une des revendications précédentes, dans lequel existent un texte public et des données secrètes, le dispositif (10) présentant un dispositif de commande disposé de manière à alimenter les informations des données secrètes vers le dispositif (22) destiné à sélectionner, de sorte que celles-ci soient cachées dans le texte public par modification de ce dernier.

14. Procédé (10) selon la revendication 13, dans lequel les statistiques utilisées pour une compression et/ou un encryptage dépendent du texte public, de sorte que des concordances de fragments de données dans le texte public et les données secrètes sont utilisées pour une compression efficace.

15. Dispositif (10) selon l'une des revendications précédentes, dans lequel le dispositif (20) destiné à déterminer les alternatives de formulation peut être commandé par l'intermédiaire des informations partielles, afin de conserver un style déterminé, en particulier pour préférer ou exclure des alternatives de formulation déterminées, telles que, par exemple, des mots déterminés, des tronçons de phrase déterminés, la complexité grammaticale, le niveau linguistique, les modèles de construction de phrase et de place des mots, la perspective de narration, la force ethnique quant à l'origine des mots que doit avoir le texte, la liste de mots à éviter qui doit être utilisée, la manière de procéder en ce qui concerne les erreurs présumées dans le texte et s'il peut être incorporé de nouvelles erreurs.

16. Dispositif selon l'une des revendications précédentes, dans lequel peut être prédéterminé un seuil de similitude, de sorte que le dispositif (20) destiné à déterminer des alternatives de formulation détermine pour le texte des variantes de formulation similaires dont les différences sémantiques par rapport à l'alternative de départ se situent au-dessous du seuil de similitude, tandis que sont rejetées les alternatives de formulation dont les différences sémantiques par rapport à l'alternative de départ se situent au-dessus du seuil de similitude.

17. Procédé selon la revendication 15, dans lequel la quantité de texte est limitée, le seuil de similitude étant dimensionné de telle sorte que toutes les informations à cacher puissent précisément être contenues dans la quantité de texte limitée.

18. Dispositif (10) selon l'une des revendications précédentes, dans lequel le dispositif (20) destiné à déterminer une pluralité d'alternatives de formulation est disposé de manière à déterminer dynamiquement les alternatives de formulation et pour générer dynamiquement les informations partielles associées à chaque alternative de formulation.

19. Dispositif (10) selon l'une des revendications précédentes, dans lequel le dispositif (20) destiné à déterminer une pluralité d'alternatives de formulation est disposé de manière à ne sortir de la pluralité d'alternatives de formulation que l'alternative de formulation qui a été sélectionnée, sur base des informations à cacher, par le dispositif (22) destiné à sélectionner.

20. Dispositif (50) pour extraire des informations cachées dans un texte modifié, le texte modifié présentant au moins une phrase, aux caractéristiques suivantes :

un dispositif (52) destiné à fournir le texte modifié ;
un dispositif (56) destiné à analyser grammaticalement le texte modifié, pour fournir des éléments de texte du texte modifié, les éléments de texte étant des éléments de la phrase, et la phrase comprenant, outre au moins un autre élément, précisément un verbe comme élément ;
un dispositif (58) destiné à fournir des informations partielles qui sont associées à l'ordre des éléments de texte et, si le texte modifié possède des informations cachées dans des significations grammaticales des éléments de texte, aux significations grammaticales des éléments de texte, le dispositif destiné à fournir des informations partielles fournissant les mêmes informations partielles qui ont été associées, au moment de cacher les informations pour générer le texte modifié, à l'ordre des éléments de texte et, éventuellement, aux significations grammaticales des éléments de texte ;
un dispositif (60) destiné à combiner les informations partielles qui ont été fournies pour le texte modifié par le dispositif (58) destiné à fournir des informations partielles, pour obtenir les informations cachées dans le texte modifié ; et
un dispositif (62) destiné à sortir les informations cachées.

21. Dispositif (50) selon la revendication 20, dans lequel les informations partielles sont des pondérations, le dispositif (60) destiné à combiner les informations partielles effectuant un codage arithmétique, pour extraire les informations cachées.

22. Dispositif (50) selon la revendication 20, dans lequel les informations partielles sont des mots de code de Huffman simples ou canoniques et, en particulier, sans préfixe, le dispositif (60) destiné à combiner les informations partielles effectuant un codage de Huffman, les contextes de code utilisés pour le codage de Huffman étant sélectionnés par le dispositif (58) destiné à fournir et correspondant aux contextes de code utilisés au moment de cacher les informations.

23. Dispositif (50) selon l'une des revendications 20 à 22, dans lequel les informations partielles utilisées au moment de cacher concernent tout d'abord l'ordre des éléments de texte et, ensuite, les synonymes des éléments de texte dans un ordre prédéterminé, le dispositif (60) destiné à combiner les informations partielles étant disposé pour déduire de l'ordre des éléments de texte du texte modifié tout d'abord les informations partielles se référant à l'ordre et dériver, ensuite, en partant d'un ordre des éléments de texte prédéterminé, les informations partielles associées aux différents éléments de texte.

24. Dispositif (50) selon l'une des revendications 20 à 23, dans lequel le dispositif (58) destiné à fournir des informations partielles présente, par ailleurs, la caractéristique suivante :

un dispositif destiné à déterminer une pluralité d'alternatives de formulation pour le texte modifié en variant l'ordre des éléments de texte et/ ou en utilisant des synonymes ou des paraphrases pour les éléments de texte, chaque alternative de formulation du texte étant grammaticalement correcte et ayant sensiblement le même sens que le texte, à chaque ordre et/ou à chaque synonyme ou paraphrase étant associées des informations partielles déterminées, le dispositif (58) destiné à fournir des informations partielles étant disposé de manière à accéder au dispositif destiné à déterminer une pluralité d'alternatives de formulation, pour récupérer les informations partielles se rapportant à l'ordre et/ou à la signification grammaticale des éléments de texte.

25. Procédé pour cacher des informations dans un texte présentant au moins une phrase, aux étapes suivantes consistant à :

fournir le texte ;
analyser grammaticalement le texte, pour fournir des éléments de texte, les éléments de texte étant des éléments de la phrase et la phrase présentant, outre au moins un autre élément, précisément un verbe comme élément ;
déterminer une pluralité d'alternatives de formulation du texte

- en variant l'ordre des éléments de texte eux-mêmes,

- en déterminant des synonymes pour les éléments de texte et en variant l'ordre des synonymes pour les éléments de texte, ou

- en déterminant des synonymes pour au moins un élément de texte et en variant l'ordre d'un synonyme pour l'au moins un élément de texte et un autre élément de texte de la phrase,

chaque alternative de formulation du texte étant grammaticalement correcte et ayant sensiblement le même sens que le texte, à chaque ordre et à chaque synonyme déterminé étant associées des informations partielles déterminées ;
sélectionner une alternative de formulation parmi la pluralité d'alternatives de formulation, de sorte que les informations partielles associées à l'alternative de formulation choisie correspondent aux informations à cacher ; et
sortir les alternatives de formulation constituant un texte modifié, dans le texte modifié étant contenues les informations à cacher.

26. Procédé pour extraire des informations cachées dans un texte modifié, le texte modifié présentant au moins une phrase, aux caractéristiques suivantes :

fournir le texte modifié ;
analyser grammaticalement le texte modifié, pour fournir des éléments de texte du texte modifié, les éléments de texte étant des éléments de la phrase, et la phrase présentant, outre au moins un autre élément, précisément un verbe comme élément ;
fournir des informations partielles qui sont associées à l'ordre des éléments de texte et aux significations grammaticales des éléments de texte, les mêmes informations partielles qui ont été associées, au moment de cacher les informations pour générer le texte modifié, à l'ordre des éléments de texte et, si le texte modifié possède des informations cachées dans des significations grammaticales des éléments de texte, aux significations grammaticales des éléments de texte étant fournies ;
combiner les informations partielles qui ont été fournies pour le texte modifié par l'étape de fourniture des informations partielles, pour obtenir les informations cachées dans le texte modifié ; et
sortir les informations cachées.

27. Dispositif selon la revendication 1 ou 20, dans lequel le dispositif (20) destiné à déterminer des alternatives de formulation ou le dispositif (58) destiné à fournir des informations partielles est disposé de manière à utiliser une mémoire de mots sous forme d'arbre ou de graphique composé (a) de formes de mot pleines, donc de mots déclinés, qui sont alors mis en rapport avec d'autres mots déclinés; ou (b) de décompositions morphologico-syntaxiques selon les classes de déclinaison et, en particulier, une division en préfixes de mot, radicaux de mot et suffixes de mot, seuls les radicaux de mot ou les combinaisons préfixe de mot-radical de mot étant explicitement mis en rapport comme synonymes et les formes déclinées respectives étant analysées selon la nécessité actuelle pour chaque mot préalablement trouvé, à l'aide de données de déclinaison, et générées en conséquence pour un synonyme choisi.

28. Dispositif selon la revendication 27, **caractérisé par le fait que** les renvois à des synonymes sont soit organisés comme (a) chaîne de significations synonymes d'un mot qui, tout d'abord, renvoient l'un à l'autre en forme d'anneau et, en second lieu, sont ordonnées implicitement par une prescription d'ordre, telle que l'ordre lexical ou la disposition selon la probabilité de présentation, ou explicitement par une caractérisation du rang d'un ou de plusieurs éléments, ou comme (b) groupes de mots considérés comme synonymes ou comme renvois aux synonymes avec la caractéristique que, inversement, il est également renvoyé à ce groupe par les synonymes concernés ou que ce groupe est mémorisé comme valeur d'un synonyme.

FIG. 1

56    58

**Extrahieren**

modifizierter
Text ○——————→ | Analyse | ——→ | Teilinfor mationen |    ⌇ 50

52

| Kombination der Teil.-inf. | ——→ | Aus gabe | ⌇ 62 / 54  extrahierte
                                                              Informationen ○

60

FIG. 2

## Alternativengenerierung für eine Phrase

**300**

Kopf gefunden?

Nein

Ja

**302**

Generiere mögliche Formulierungsalternativen:
Synonyme, gleichbedeutende
Paraphrasen, Wortstellungsalternativen

**303**

Generiere Alternativen für die
entstehenden Teilphrasen

**304**

Generiere Alternativen zu
Synonymen und gleichbedeutenden
Paraphrasen unter Berücksichtigung
der Information im regierenden Kopf

FIG. 3

**Alternative** *i*

```
┌─────────────────────────────┐
│     Rückführung auf         │  ～ 400
│    Alternativenklasse       │
└─────────────────────────────┘
              │
              ▼
┌─────────────────────────────┐
│ Rückgriff auf Wahrscheinlichkeits- │  ～ 402
│ verteilung oder Neugenerierung der │
│   Wahrscheinlichkeitsverteilung    │
└─────────────────────────────┘
              │
              ▼
┌─────────────────────────────┐
│ Kodierung der geheimen Nachricht │  ～ 404
│ durch Wahl der den Nachrichtenbits│
│    entsprechenden Alternative     │
└─────────────────────────────┘
```

**Alternative** *i* +1

FIG. 4